(19)

Europäisches
Patentamt
European
Patent Office
Office européen
des brevets

(11) **EP 1 873 605 A1**

(12) **EUROPEAN PATENT APPLICATION**

(43) Date of publication:
**02.01.2008 Bulletin 2008/01**

(51) Int Cl.:
***G05D 1/02*** *(2006.01)*

(21) Application number: **07107487.6**

(22) Date of filing: **04.05.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **28.06.2006 KR 20060058980
28.06.2006 KR 20060058981
28.06.2006 KR 20060058982**

(71) Applicant: **Samsung Electronics Co., Ltd.
Suwon-si
Gyeonggi-do (KR)**

(72) Inventors:
• **Chung, Woo Ram
Gyeonggi-do (KR)**
• **Joo, Jae Man
Yeongtong-dong, Paldal-gu, Suwon-si
Gyeonggi-do (KR)**

• **Wee, Hoon
Sanghyeon-dong, Yongin-si
Gyeonggi-do (KR)**
• **Kim, Dong Won
Yeongtong-dong, Yeongtong-gu, Suwon-si
Gyeonggi-o (KR)**
• **Hong, Jun Pyo
Yeongtong-gu, Suwon-si
Gyeonggi-do (KR)**
• **Kim, Yong Tae
Sanghyeon-dong, Yongin-si
Gyeonggi-do (KR)**

(74) Representative: **Zimmer, Franz-Josef
Grünecker, Kinkeldey,
Stockmair & Schwanhäusser
Anwaltssozietät
Maximilianstrasse 58
80538 München (DE)**

(54) **Robot cleaner system and method of controlling the same**

(57)     A robot cleaner system and a control method thereof reduce manufacturing costs, expand a detected distance, and precisely control a movement and positioning of a robot cleaner. The robot cleaner system includes a robot cleaner and a station. One of the robot cleaner and the station transmits a signal of a predetermined frequency and the other receives the signal so that a direction toward the transmitting side for transmitting the signal is detected based on a Doppler shift observed by the receiving side that receives the signal.

Fig.5

EP 1 873 605 A1

## Description

BACKGROUND OF THE INVENTION

### 1. Field of the Invention

The present invention relates to a robot cleaner system and a method of controlling the same, and more particularly, to a method of controlling the movement and position of a robot cleaner system for freely traveling in a region to be cleaned and for automatically cleaning the region.

### 2. Description of the Related Art

A robot cleaner is an apparatus which spontaneously travels a predetermined sized cleaning area without user's manipulation and performs cleaning of dust, foreign substances, and the like on the floor The robot cleaner determines a distance from an obstacle such as furniture, stationary objects, a wall, or the like, installed in the cleaning area such as a home, an office, and or the like using a sensor or a camera, and performs the cleaning while traveling to avoid colliding against the obstacle using the determined information.

When the robot cleaner must move to a specific place in the cleaning area while spontaneously traveling and cleaning the cleaning area, a conventional control of the movement and/or position of the robot cleaner is performed, by which a specific place where a radio frequency (RF) signal generator is installed is detected by detecting an RF signal generated from the RF generator installed at the specific place to move the robot cleaner toward the specific place, or an overall image about the cleaning area is obtained by a camera and the obtained overall image is analyzed.

However, when using the detection of the RF signal, since the transmission distance of the RF signal is relatively shorter and the sensitivity of the RF signal is significantly reduced by the obstacle, the method of using the detection of the RF signal does not suit a wide cleaning area or an intricate area. When the camera is used, since an expensive camera must be installed and software having a complicated algorithm for the analysis of the image is required, high costs are incurred.

SUMMARY OF THE INVENTION

The present invention has been made in view of the above-mentioned problems, and an aspect of the invention is to provide a robot cleaner system in which, instead of a vision system requiring expensive equipment such as a camera, a relative position between a robot cleaner and a station is determined by observing Doppler shift using relatively inexpensive devices so that costs of manufacturing the robot cleaner system are reduced, and a control method thereof.

It is another aspect of the present invention to provide a robot cleaner system in which the robot cleaner system is controlled in an area wider than that of a case using a vision system or an RF signal so that a detection area of a robot cleaner and a station are significantly increased, and a control method thereof.

It is another aspect of the present invention to provide a robot cleaner system in which, in order to solve incorrect detection of position and direction that would be generated by an obstacle when using an RF signal or a vision system, the observation of the Doppler shift of radio waves (sound waves) experiencing a relatively weak influence of the obstacle is utilized to enable the correct detection of the position and the direction between the robot cleaner and the station, and a control method thereof.

In accordance with one aspect, the present invention provides a robot cleaner system including a robot cleaner, and a station, wherein one of the robot cleaner and the station transmits a signal of a predetermined frequency and the other receives the signal so that a direction toward the transmitting side for transmitting the signal is detected based on the Doppler shift observed by the receiving side for receiving the signal.

The station includes a transmitter for transmitting the signal of the predetermined frequency, the robot cleaner comprises a movable receiving unit installed to receive the signal transmitted from the transmitter of the station and to observe the Doppler shift of the received signal, wherein a direction of the station is detected based on the Doppler shift observed by the receiving unit.

The receiving unit includes an antenna for receiving the signal transmitted from the station.

The movement of the receiving unit is the movement of the antenna of the receiving unit along a rotation track by which the robot cleaner rotates in a stopped state.

The receiving unit further includes a rotation body provided to rotate in the robot cleaner and in which the antenna is installed, and the movement of the receiving unit is the movement of the antenna of the receiving unit along a rotation track of the rotation body due to the rotation of the rotation body.

The movement of the receiving unit is the movement of the antenna along a traveling track of the robot cleaner by which the robot cleaner travels by a predetermined displacement.

The receiving unit further includes a frequency detector for detecting the frequency of the signal received by the receiving unit, and a direction detector detecting a direction in which the station is positioned by comparing the frequency detected by the frequency detector and the frequency of the signal transmitted from the station to generate direction information.

The direction detector determines a direction indicated by the antenna when the Doppler shift is not observed from the frequency detected by the frequency detector as the direction in which the station is positioned.

When the Doppler shift is observed as the antenna moves along one of a rotation track of the robot cleaner and a rotation track of the rotation body, an angle $\theta_1$ between a forward direction of the robot cleaner and a direction in which the station is positioned is expressed by the following formula,

$$\theta_1 = \sin^{-1}\left(\frac{\dot{x}_1}{r\dot{\theta}_1}\right)$$

where, r is a distance from one of rotation axes of the rotation body and the robot cleaner to the antenna, $\dot{\theta}_1$ is an angular velocity of $\theta_1$, and $\dot{x}_1$ is a linear velocity of the antenna in the direction parallel to the traveling direction of the signal when the antenna traveling along the rotation track is positioned in the forward direction of the robot cleaner.

When the Doppler shift is observed as the antenna moves by a traveling track along a predetermined displacement of the robot cleaner, an angle $\theta_2$ between the forward direction of the robot cleaner and the direction in which the station is positioned is expressed by the formula,

$$\theta_2 = \cos^{-1}\left(\frac{\dot{x}_2}{|V|}\right)$$

where, $\dot{x}_2$ is an X-directional linear velocity of a vector V indicating a traveling displacement of the robot cleaner, the X-direction is parallel to a traveling direction of the signal transmitted from the station, and $|V|$ is a magnitude (speed) of the vector V.

When the number of the antennas is two or more, the antennas are installed at a predetermined interval.

The station includes a docking station for charging the robot cleaner and discharging foreign substances.

In accordance with one aspect, the present invention provides a control method of a robot cleaner system having a robot cleaner and a station, the control method including transmitting a signal of a predetermined frequency from one of the robot cleaner and the station and being received by the other, and detecting a direction in which a transmitting side for transmitting the signal is positioned based on the Doppler shift observed by a receiving side that receives the signal.

The station transmits the signal of the predetermined frequency through a transmitter; the robot cleaner receives the signal transmitted from the station through a receiving unit; the receiving unit determines whether the Doppler shift is observed; and the direction in which the station is positioned is detected based on the observation of the Doppler shift.

The receiving unit includes an antenna for receiving the signal transmitted from the station.

The movement of the receiving unit is the movement of the antenna of the receiving unit along a rotation track by which the robot cleaner rotates in a stopped state.

The receiving unit further includes a rotation body provided to rotate in the robot cleaner and in which the antenna is installed, and movement of the receiving unit is movement of the antenna of the receiving unit along a rotation track of the rotation body due to the rotation of the rotation body.

The movement of the receiving unit is the movement of the antenna along a traveling track of the robot cleaner by which the robot cleaner travels by a predetermined displacement.

The direction detector determines a direction indicated by the antenna when the Doppler shift is not observed from the frequency detected by the frequency detector as the direction in which the station is positioned.

When the Doppler shift is observed as the antenna moves along one of a rotation track of the robot cleaner and a rotation track of the rotation body, an angle $\theta_1$ between a forward direction of the robot cleaner and a direction in which the station is positioned is expressed by the following formula,

$$\theta_1 = \sin^{-1}\left(\frac{\dot{x}_1}{r\dot{\theta}_1}\right)$$

where, r is a distance from one of rotation axes of the rotation body and the robot cleaner to the antenna, $\dot{\theta}_1$ is an angular velocity of $\theta_1$, and $\dot{x}_1$ is a linear velocity of the antenna in the direction parallel to the traveling direction of the signal when the antenna moving along the rotation track is positioned in the forward direction of the robot cleaner.

When the Doppler shift is observed as the antenna moves by a traveling track along a predetermined displacement of the robot cleaner, an angle $\theta_2$ between the forward direction of the robot cleaner and the direction in which the station is positioned is expressed by the formula,

$$\theta_2 = \cos^{-1}\left(\frac{\dot{x}_2}{|V|}\right)$$

where, $\dot{x}_2$ is an X-directional linear velocity of a vector V indicating a traveling displacement of the robot cleaner, the X-direction is parallel to a traveling direction of the signal transmitted from the station, and $|V|$ is a magnitude (speed) of the vector V.

In accordance with one aspect, the present invention provides a robot cleaner system including a robot cleaner for transmitting a signal of a predetermined frequency, and a station comprising a movable receiving unit for receiving the signal transmitted from the robot cleaner and observing the Doppler shift of the received signal, and for detecting a direction in which the robot cleaner is positioned and a distance from the robot cleaner based on the Doppler shift observed by the receiving unit.

The receiving unit includes an antenna to receive the signal transmitted from the robot cleaner.

The receiving unit further includes a rotation body provided to rotate in the station and in which the antenna is installed, and movement of the receiving unit is movement of the antenna of the receiving unit along a rotation track of the rotation body due to the rotation of the rotation body.

The receiving unit further includes a frequency detector to detect the frequency of the signal received by the receiving unit, and a direction detector detecting a direction in which the station is positioned by comparing the frequency detected by the frequency detector and the frequency of the signal transmitted from the robot cleaner to generate direction information.

The direction detector determines a direction indicated by the antenna when the Doppler shift is not observed from the frequency detected by the frequency detector as the direction in which the robot cleaner is positioned.

When the Doppler shift is observed as the antenna moves along a rotation track of the rotation body, an angle $\theta_1$ between a direction indicated by the antenna and a direction in which the robot cleaner is positioned is expressed by the following formula,

$$\theta_1 = \sin^{-1}\left(\frac{\dot{x}_1}{r\dot{\theta}_1}\right)$$

where, r is a distance from a rotation axis of the rotation body to the antenna, $\dot{\theta}_1$ is an angular velocity of $\theta_1$, and $\dot{x}_1$ is a linear velocity of the antenna in the direction parallel to the traveling direction of the signal when the antenna traveling along the rotation track is positioned in the indicated direction.

A distance R from a central point of the receiving unit to a transmitter of the robot cleaner is expressed by the following formula,

$$R = \frac{r}{\cos\left(\theta_3 - \theta_3{'}\right)}$$

where, r is a distance from the central point of the receiving unit to the antenna, $\theta_3$ is an angle between a predetermined reference direction of the receiving unit and the direction where the robot cleaner is positioned, and $\theta_3{'}$ is an angle between the reference direction and a direction in which the antenna is oriented.

When the number of the antennas is two or more, i.e., there is a plurality of antennas, the antennas are installed at a predetermined interval.

The station includes a docking station for charging the robot cleaner and discharging foreign substances.

In accordance with one aspect, the present invention provides a control method of a robot cleaner system including transmitting a signal of a predetermined frequency from a robot cleaner, receiving the signal transmitted from the robot cleaner by the station through a receiving unit, determining whether the Doppler shift is observed by the receiving unit, and detecting a direction in which the robot cleaner is positioned and a distance from the robot cleaner based on the Doppler shift.

The receiving unit includes an antenna to receive the signal transmitted from the robot cleaner.

The receiving unit further includes a rotation body provided to rotate in the station and in which the antenna is installed, and movement of the receiving unit is movement of the antenna of the receiving unit along a rotation track of the rotation body due to the rotation of the rotation body.

The direction detector determines a direction indicated by the antenna when the Doppler shift is not observed from the frequency of the signal received by the receiving unit as the direction in which the robot cleaner is positioned.

When the Doppler shift is observed as the antenna moves along a rotation track of the rotation body, an angle $\theta_1$ between a direction indicated by the antenna and a direction in which the robot cleaner is positioned is expressed by the following formula,

$$\theta_1 = \sin^{-1}\left(\frac{\dot{x}_1}{r\dot{\theta}_1}\right)$$

where, r is a distance from a rotation axis of the rotation body to the antenna, $\dot{\theta}_1$, is an angular velocity of $\theta_1$, and $\dot{x}_1$ is a linear velocity of the antenna in the direction parallel to the traveling direction of the signal when the antenna moving along the rotation track is positioned in the indicated direction.

A distance R from a central point of the receiving unit to a transmitter of the robot cleaner is expressed by the following formula,

$$R = \frac{r}{\cos(\theta_3 - \theta_3')}$$

where, r is a distance from the central point of the receiving unit to the antenna, $\theta_3$ is an angle between a predetermined reference direction of the receiving unit and the direction in which the robot cleaner is positioned, and $\theta_3'$ is an angle between the reference direction and a direction in which the antenna is oriented.

In accordance with one aspect, the present invention provides a robot cleaner system including at least three transmitters to transmit signals of predetermined natural frequencies different from each other, and a station comprising a movable receiving unit to receive the signals transmitted from the at least three transmitters and to observe the Doppler shifts of the received signals, and to obtain direction information of the respective at least three transmitters based on the Doppler shifts observed by the receiving unit and relative present positions of the station based on the direction information of the at least three transmitters.

The receiving unit includes an antenna for receiving the signals transmitted from the at least three transmitters.

The receiving unit further includes a rotation body provided to rotate in the robot cleaner and in which the antenna is installed, and rotation of the receiving unit is movement of the antenna of the receiving unit along a rotation track of the rotation body due to the rotation of the rotation body.

The receiving unit further includes a frequency detector to detect the frequencies of the signals received by the receiving unit, and a direction detector detecting directions in which the at least three transmitters are positioned by comparing the frequencies detected by the frequency detector and the frequencies of the signals transmitted from the station to generate direction information.

The direction detector determines directions indicated by the antenna when the Doppler shifts are not observed from the frequencies detected by the frequency detector as the directions in which the at least three transmitters are positioned.

When the Doppler shift is observed by which the antenna moves along one of a rotation track of the robot cleaner and a rotation track of the rotation body, an angle $\theta_1$ between a forward direction of the robot cleaner and directions in which the at least three transmitters are positioned is expressed by the following formula,

$$\theta_1 = \sin^{-1}\left(\frac{\dot{x}_1}{r\dot{\theta}_1}\right)$$

where, r is a distance from one of rotation axes of the rotation body and the robot cleaner to the antenna, $\dot{\theta}_1$ is an angular velocity of $\theta_1$, and $\dot{x}_1$ is a linear velocity of the antenna in the direction parallel to the traveling directions of the signals when the antenna traveling along the rotation track is positioned in the forward direction of the robot cleaner.

The at least three transmitters include a first transmitter, a second transmitter, and a third transmitter. A present position of the robot cleaner is detected by estimating a first angle formed by the first transmitter, the robot cleaner, and the second transmitter, and a second angle formed by the second transmitter, the robot cleaner, and the third transmitter and taking the first angle and the second angle into consideration.

When the number of the antennas is two or more, the antennas are installed at a uniform interval.

One of the at least three transmitters includes a docking station for charging the robot cleaner and discharging foreign substances.

The at least three transmitters are installed at predetermined fixed positions.

In accordance with one aspect, the present invention provides a control method of a robot cleaner system including transmitting signals of predetermined natural frequencies from at least three transmitters, receiving the signals transmitted from the at least three transmitters by a robot cleaner through a receiving unit, determining whether the Doppler shift is observed by the receiving unit, and detecting directions in which the at least three transmitters are positioned based on the observation of the Doppler shift.

The receiving unit includes an antenna for receiving the signals transmitted from the at least three transmitters.

The receiving unit further includes a rotation body provided to rotate in the robot cleaner and in which the antenna is installed, and rotation of the receiving unit is movement of the antenna of the receiving unit along a rotation track of the rotation body due to the rotation of the rotation body.

The direction detector determines directions indicated by the antenna when the Doppler shifts are not observed from the frequencies detected by the frequency detector as the directions in which the at least three transmitters are positioned.

When the Doppler shift is observed by which the antenna moves along one of a rotation track of the robot cleaner and a rotation track of the rotation body, an angle $\theta_1$ between a forward direction of the robot cleaner and directions in which the at least three transmitters are positioned is expressed by the following for-

mula,

$$\theta_1 = \sin^{-1}\left(\frac{\dot{x}_1}{r\dot{\theta}_1}\right)$$

where, r is a distance from one of rotation axes of the rotation body and the robot cleaner to the antenna, $\dot{\theta}_1$, is an angular velocity of $\theta_1$, and $\dot{x}_1$ is a linear velocity of the antenna in the direction parallel to the traveling directions of the signals when the antenna traveling along the rotation track is positioned in the forward direction of the robot cleaner.

The at least three transmitters include a first transmitter, a second transmitter, and a third transmitter. A present position of the robot cleaner is detected by estimating a first angle formed by the first transmitter, the robot cleaner, and the second transmitter, and a second angle formed by the second transmitter, the robot cleaner, and the third transmitter and taking the first angle and the second angle into consideration.

Additional aspects and/or advantages of the invention will be set forth in part in the description which follows and, in part, will be apparent from the description, or may be learned by practice of the invention.

BRIEF DESCRIPTION OF THE DRAWINGS

These and/or other aspects and advantages of the invention will become apparent and more readily appreciated from the following description of the embodiments, taken in conjunction with the accompanying drawings in which:

FIG. 1 is a perspective view illustrating a robot cleaner system according to a first embodiment of the present invention;
FIG. 2 is a block diagram illustrating a control system of the robot cleaner system in FIG. 1;
FIG. 3 is a view illustrating a principle of detecting direction using Doppler shift in the robot cleaner system according to the present invention;
FIG. 4 is a graph illustrating variation of frequencies with respect to time in a rotating antenna;
FIG. 5 is a view illustrating the detection of direction by observing Doppler shift when the robot cleaner according to the first embodiment of the present invention is stopped;
FIG. 6 is a view illustrating the detection of direction by observing Doppler shift during the movement of the robot cleaner according to the first embodiment of the present invention;
FIG. 7 is a flowchart illustrating a control method of the robot cleaner system according to the first embodiment of the present invention;
FIG. 8 is a perspective view illustrating a robot cleaner system according to a second embodiment of the present invention;
FIG. 9 is a block diagram illustrating a control system of the robot cleaner system in FIG. 8;
FIG. 10 is a view illustrating detection of a distance and a direction by observing Doppler shift in the robot cleaner system according to the second embodiment of the present invention;
FIG. 11 is a flowchart illustrating a control method of the robot cleaner system according to the second embodiment of the present invention;
FIG. 12 is a block diagram illustrating a control system of a robot cleaner system according to a third embodiment of the present invention;
FIG. 13 is a view illustrating detection of a position by observing Doppler shift in the robot cleaner system according to the third embodiment of the present invention; and
FIG. 14 is a flowchart illustrating a control method of the robot cleaner system according to the third embodiment of the present invention.

DETAILED DESCRIPTION OF THE EMBODIMENTS

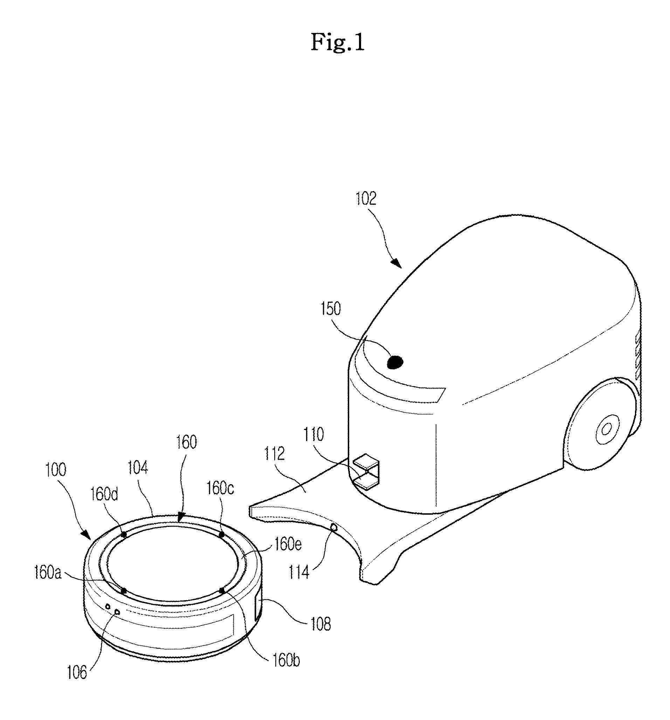

Reference will now be made in detail to the embodiments of the present invention, examples of which are illustrated in FIGS. 1 to 14, wherein like reference numerals refer to the like elements throughout. The embodiments are described below to explain the present invention by referring to the figures. The embodiments are described below to explain the present invention by referring to the figures.

FIG. 1 is a perspective view illustrating a robot cleaner system according to a first embodiment of the present invention. As shown in FIG. 1, the robot cleaner system includes a robot cleaner 100 and a docking station 102. The robot cleaner 100 travels an indoor space and suctions foreign substances on floor using a suctioning force caused by the rotation of a fan and/or static electricity caused by a charging device to clean the floor. The docking station 102 is provided to charge a battery of the robot cleaner 100 and to discharge the foreign substances therefrom.

In the lower side of a robot main body 104, electrically driven wheels (not shown) are installed to enable the robot cleaner 100 to travel. The wheels are driven by a driving motor (not shown) such that the robot cleaner 100 can perform a linear traveling and rotating. Moreover, in the outer side of the robot main body 104, an obstacle detecting sensor 106 such as an infrared sensor or an ultrasonic sensor are installed such that the robot cleaner 100 can avoid obstacles during the traveling. In the side of the robot main body 104, an opening 108 is formed to transfer the suctioned foreign substances accommodated in the robot cleaner 100 to the docking station 102. The opening 108 is coupled with a suctioning port 110 of the docking station 102 so that the robot cleaner 100 discharges the foreign substances into the docking station 102.

In the front side of the docking station 102, a guide member 112 is provided to guide the docking of the robot cleaner 100. The guide member 112 is provided with a connecting terminal 114 for charging the battery provided in the robot cleaner 100.

The robot cleaner 100 spontaneously travels and automatically cleans the cleaning area, and when the suctioned foreign substances must be discharged because of an excessive quantity of the suctioned foreign substances, the battery must be recharged because of the decreased capacity of the battery, or the cleaning is finished, the robot cleaner 100 returns to the docking station 102 and performs a desired job (such as discharging of the foreign substances, recharging the battery, awaiting a next job, or the like). In order to return from a certain place distant from the docking station 102 to the docking station 102, the robot cleaner 100 must obtain at least direction information of the docking station 102. In the robot cleaner system according to the embodiment of the present invention, the Doppler shift is utilized such that the robot cleaner 100 obtains the direction information of the docking station 102. In other words, based on the Doppler shift observed at a receiving side for receiving a signal when transmitting and receiving the signal between the robot cleaner 100 and the docking station 102, the direction information of the transmitting side is obtained, and the traveling direction and a position of the robot cleaner 100 are controlled based on the direction information.

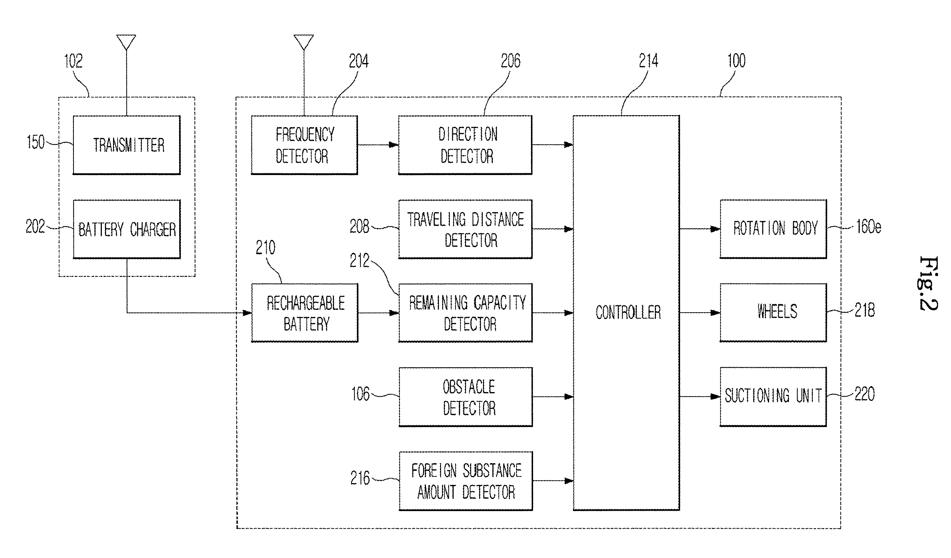

To this end, the docking station 102 of the robot cleaner system in FIG. 1 is provided with a transmitter 150 for transmitting radio waves of a predetermined frequency, and the robot cleaner 100 is provided with a receiving unit 160 for receiving the radio waves transmitted from the transmitter 150 of the docking station 102. Needless to say, sound waves may be used instead of the radio waves. In one embodiment, the receiving unit 160 of the robot cleaner 100 includes four antennas 160a to 160d installed on a ring-shaped rotation body 160e with uniform intervals therebetween. As the rotation body 160e rotates at a preset velocity, the four antennas 160a to 160d travel along a predetermined track. The shape of the rotation body 160e for the antennas 160a to 160d is not restricted to the ring-shape, but any useable shape may be employed to enable the antennas 160a to 160d to travel along the predetermined track. Moreover, without the rotation body 160e, the whole robot cleaner 100 may rotate to cause the movement of the antennas 160a to 160d. The receiving unit 160, as shown in FIG. 1, further includes a frequency detecting unit and a direction detecting unit in addition to the antennas 160a to 160d and the rotation body 160e. The frequency detecting unit and an observing unit will be described in the description of FIG. 2.

FIG. 2 is a block diagram illustrating a control system of the robot cleaner system in FIG. 1. As shown in FIG. 2, the docking station 102 includes the transmitter 150 and a battery charger 202. The transmitter 150, as described in connection with FIG. 1, transmits radio waves of a predetermined frequency. The battery charger 202 converts commercial alternating current power inputted from the exterior into electric power for charging a rechargeable battery 210 of the robot cleaner 100 such that the battery 210 of the robot cleaner 100 can be recharged.

The control system of the robot cleaner 100 includes a controller 214 for controlling the whole operation of the robot cleaner 100. An input side of the controller 214 is electrically connected to a frequency detector 204, a direction detector 206, a traveling distance detector 208, a remaining capacity detector 212, an obstacle detector 106, and a foreign substance amount detector 216 to be communicated with the controller 214. The frequency detector 204 receives the radio waves of a predetermined frequency transmitted from the transmitter 150 of the docking station 102 and detects the frequency of the received radio waves. Since the antennas 160a to 160d of the robot cleaner 100 move along the circular track, a frequency (Doppler frequency) of the radio waves actually detected by the antennas 160a to 160d may have a value different from the frequency (original frequency) of the radio waves transmitted from the transmitter 150 according to the positions of the antennas 160a to 160d due to the Doppler shift. The direction detector 206 detects a direction toward the transmitter 150 of the docking station 102 (that is, a direction toward a place from which the radio waves are transmitted), based on the frequency detected by the frequency detector 204, and provides the direction information to the controller 214. The traveling distance detector 208 detects a traveling distance of the robot cleaner 100 and provides the same to the controller 214. The traveling distance of the robot cleaner 100 may be obtained by detecting the revolution of the wheels 218 by an encoder. The remaining capacity detector 212 detects the remaining capacity of the battery 210 and provides information about the remaining capacity to the controller 214. When the battery 210 must be charged because of a small remaining capacity of the battery, the controller 214 controls the robot cleaner 100 to stop performing a job at the present time and to return to the docking station 102 such that the battery 210 is recharged. The obstacle detector 106 detects whether an obstacle is present in front of the robot cleaner 100 during the traveling and provides information about the obstacle to the controller 214. The controller 214 changes the traveling path based on the obstacle information to bypass the robot cleaner 100 around the obstacle so that the robot cleaner 100 does not stop the traveling due to the obstacle. The foreign substance amount detector 216 detects the quantity of the foreign substances gathered in the robot cleaner 100 and provides information about the amount of the gathered foreign substances to the controller 214. The controller 214 checks the amount of the foreign substances in the robot cleaner 100 at the present time through the foreign substance amount information, and controls the robot cleaner 100 such that, when the quantity of the foreign substances reaches the maximal quantity of the foreign substances that the robot cleaner 100 can accommodate, the cleaning is stopped, and the robot cleaner 100 returns to the docking station 102 to discharge the foreign substances.

To the output side of the controller 214, the rotation body 160e, the wheels 218, and a suctioning unit 220 are connected. The rotation body 160e is one of components of the receiving unit 160 described in connection with FIG. 1 and moves the antennas 160a to 160d along a predetermined track. The wheels 218 are provided to move the robot cleaner 100 and include driving wheels foradvancing and reversing, and a direction changing wheel for changing a traveling direction. The suctioning unit 220 faces the lower side of the robot cleaner 100 and suctions the foreign substances on the floor in the cleaning area to accommodate the suctioned foreign substances in an accommodating space of the robot cleaner 100.

The wheels 218 include driving wheels and the direction changing wheel to allow the robot cleaner 100 to rotate in a stopped state. Thus, if using the operational property of the robot cleaner 100, the antennas 160a to 160d may be rotated by rotating the robot cleaner 100 instead of using the rotation body 160e of the receiving unit 160.

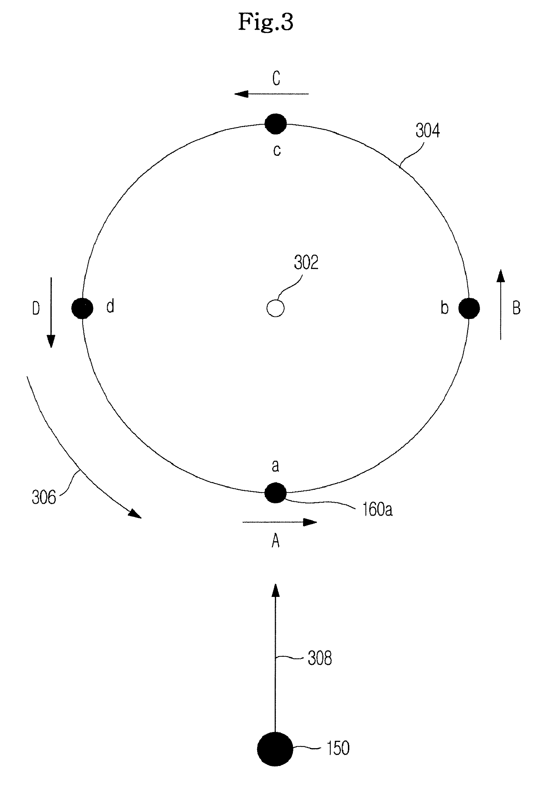

FIG. 3 is a view illustrating a principle of detecting direction using the Doppler shift in the robot cleaner system according to the present invention. The Doppler shift is observed at a receiver side when there is a relative movement between a signal source and a receiver. As the signal source approaches the receiver, the frequency of a signal that the receiver receives is increased relative to an original frequency of the signal transmitted from the signal source. On the other hand, as the signal source goes away from the receiver, the frequency of the signal received by the receiver is decreased relative to the original frequency of the signal transmitted from the signal source. When there is not any relative movement between the signal source and the receiver, the frequency of the signal transmitted from the signal source is identical to the frequency of the signal received by the receiver, so that the Doppler shift is not observed at the receiver side.

In FIG. 3, a circle 304 having a central point 302 corresponds to the track formed when the antennas 160a to 160d in FIG. 1 physically rotate in the direction indicated by arrows 306, and the arrows 306 indicate a traveling direction of the signal (radio wave) transmitted from the transmitter 150.

When any one of the four antennas 160a to 160d (for example, 160a) is positioned at a point a, an instantaneous component of the rotational motion of the antenna 160a is a component in the direction indicated by an arrow A, and a linear velocity component of the rotational motion of the antenna 160a at the point a is perpendicular to the direction 308 where the signal (radio wave) transmitted from the transmitter 150 travels. Thus, at the point a, the Doppler shift is never observed.

When the antenna 160a is positioned at a point b at 90 degrees (along a circumference of the circle 304 having a central point 302 that corresponds to the track formed when the antennas 160a to 160d in FIG. 1 physically rotate in the direction indicated by arrows 306) with respect to the point a, the antenna 160a travels in a direction indicated by an arrow B identical to the traveling direction 308 of the signal (radio wave) transmitted from the transmitter 150 and goes away from the transmitter 150. Thus, a maximal reduction of frequency is generated from the signal (radio wave) received by the antenna 160a when the antenna 160a is positioned at the point b, and this is caused by the Doppler shift described above.

When the antenna 160a is positioned at a point c at 90 degrees (along a circumference of the circle 304 having a central point 302 that corresponds to the track formed when the antennas 160a to 160d in FIG. 1 physically rotate in the direction indicated by arrows 306) with respect to the point b, the rotational motion of the antenna 160a has a linear velocity component in the direction indicated by an arrow C. For example, when the antenna 160a is positioned at the point a, the linear velocity component of the rotational motion of the antenna 160a at the point c is perpendicular to the traveling direction 308 of the signal (radio wave) transmitted from the transmitter 150. Thus, even when the antenna 160 is positioned at the point c, the Doppler shift is not observed like the case at the point a.

When the antenna 160a is positioned at a point d, the rotational motion of the antenna 160a has a linear velocity component in a direction indicated by an arrow D toward the transmitter 150. Thus, a maximal increase of the frequency is generated from the signal (radio wave) received by the antenna 160a that is caused by the Doppler shift described above.

Needless to say, although the Doppler shift may be observed at points other than the points a, b, c, and d on the track on which the antenna 160a rotates. In particular, the maximal reduction and the maximal increase of the frequency are observed at the points b and d, but not at the positions a and c.

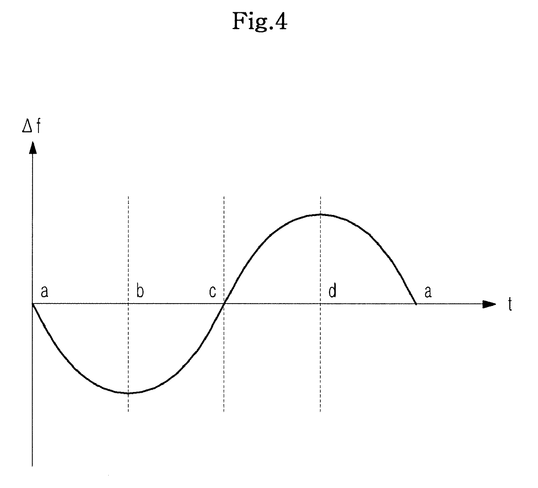

FIG. 4 is a graph illustrating variation of frequencies with respect to time in a rotating antenna. From FIG. 4, the frequencies corresponding to the respective positions of the rotating antenna may be obtained. As shown in FIG. 4, the received frequency is minimal when any one of the four antennas 160a to 160d is positioned at the point b, and is maximal when the frequency is received at the point d. In other words, since rotating angles of the antennas 160a to 160d at the point a with respect to a reference point are confirmed to determine the traveling direction of the signal (radio waves) transmitted from the transmitter 150, the directions from the antennas 160a to 160d to the transmitter 150 may be determined.

In order to obtain the graph in FIG. 4, the respective signal information from the four antennas 160a to 160d is integrated. In other words, although, in a case of rotating a single antenna to observe the Doppler shift, the graph in FIG. 4 may be obtained only when the single antenna fully rotates the circular track, if the four antennas 160a to 160d are installed on the rotation body 160e at a predetermined interval as shown in FIG. 1 and the rotation body 160e is rotated, the graph of FIG. 4 may be obtained by only a 1/4 rotation of the rotation body 160e.

In other words, when the rotation body 160e of the receiving unit 160 in FIG. 1 makes one revolution, observations at the respective sections distinguished as a, b, c, and d are repeatedly performed four times so that a more precise observation of the Doppler shift may be performed. Consequently, as the number of the antennas is increased, the time for observing the Doppler shift is shortened, and a more precise observation of the Doppler shift is enabled.

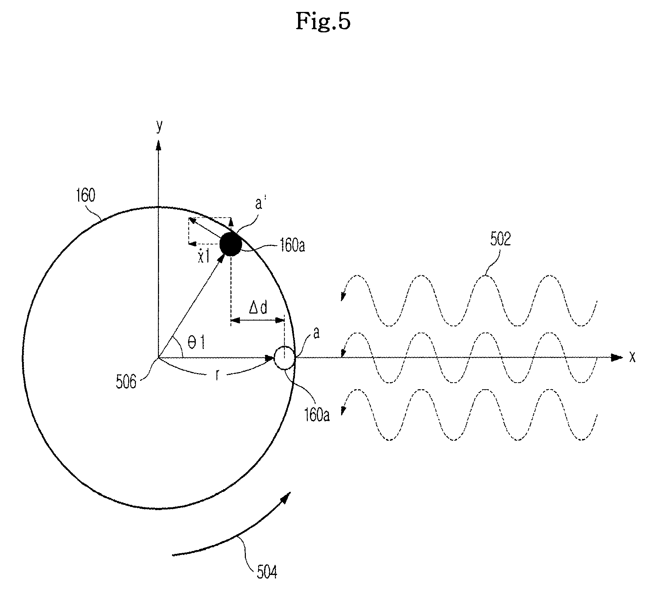

FIG. 5 is a view illustrating the detection of direction by observing a Doppler shift when the robot cleaner according to the first embodiment of the present invention is stopped. In FIG. 5, the X-axis is parallel to the traveling direction of the radio waves 502 transmitted from the transmitter 150 of the docking station 102, and as the rotation body 160e of the receiving unit 160 rotates at a constant speed when the robot cleaner 100 is stopped, the four antennas 160a to 160d rotate at a constant speed in a direction indicated by an arrow 504. In this case, at least one (for example, 160a) of the four antennas 160a to 160d passes a point a on the X-axis and reaches a point a'. The point a' in FIG. 5 is a point wherein the Doppler shift is never observed, like the point a in FIG. 3, and the point a' is a point wherein the Doppler shift (reduction of frequency) is observed due to the displacement of $\Delta d$ of the antenna 160a. Thus, when the point a' is positioned in front of the robot cleaner 100, if an angle $\theta_1$ between the point a and the point a' is known, the traveling direction of the robot cleaner 100 is compensated by $-\theta_1$ for travelling forward so that the robot cleaner 100 can travel in the X-axis direction, that is, toward the transmitter 150 of the docking station 102. In FIG. 5, the angle $\theta_1$ between the points a and a' may be expressed by the following formula 1.

[Formula 1]

$$\theta_1 = \sin^{-1}\left(\frac{\dot{x}}{r\dot{\theta}_1}\right)$$

where, $\dot{x}_1$ is an X-directional linear velocity of the antenna 160a traveling from the point a to the point a', $\dot{\theta}_1$ is an angular velocity of the antenna 160a traveling from the point a to the point a', r is a distance from a rotation axis of the rotation body 160e to the antenna 160a. Since the antenna 160a rotates on a predetermined track at a constant speed, the angular velocity $\dot{\theta}_1$, and the distance r may be obtained from the product specification of the receiving unit 160.

Moreover, the linear velocity $\dot{x}_1$ may be obtained from the following formula 2.

[Formula 2]

$$f' = \left(1 \pm \frac{v^0}{v}\right)f$$

where, f is the original frequency of the signal transmitted from the signal source, f' is the frequency (Doppler frequency) of the signal received by the receiver, $v$ is a traveling velocity of the signal in a medium, $v^0$ is a velocity of the receiver, and $\pm$ respectively means when the signal source and the receiver approach each other (+) and go away from each other (-). In the embodiment of FIG. 5, $v$ is the traveling velocity of the radio waves in air and $v^0$ is the rotation speed of the antennas 160a to 160d. However, since the Doppler shift is affected only by the relative velocity between the signal source and the receiver, that is, the linear velocity component in the X-axis direction of FIG. 5, it may be assumed that $v^0$ (the velocity of the receiver) in the formula 2 is identical to $\dot{x}_1$ (X-directional velocity of the antennas) in the formula 1. Thus, since the values of f, f', and $v$ are known, the value of $v^0$ (=$\dot{x}_1$) can obtained from them. When conditions are substituted into the formula 1, the magnitude of $\theta_1$ may be obtained. Thus, if the angle $\theta_1$ is known when the point a' is in front of the robot cleaner 100, the front side (the point a') of the robot cleaner 100 travels by being rotated by $-\theta_1$ clockwise so that the robot cleaner 100 travels along the X-axis and may be returned to the docking station 102, that is, the signal source.

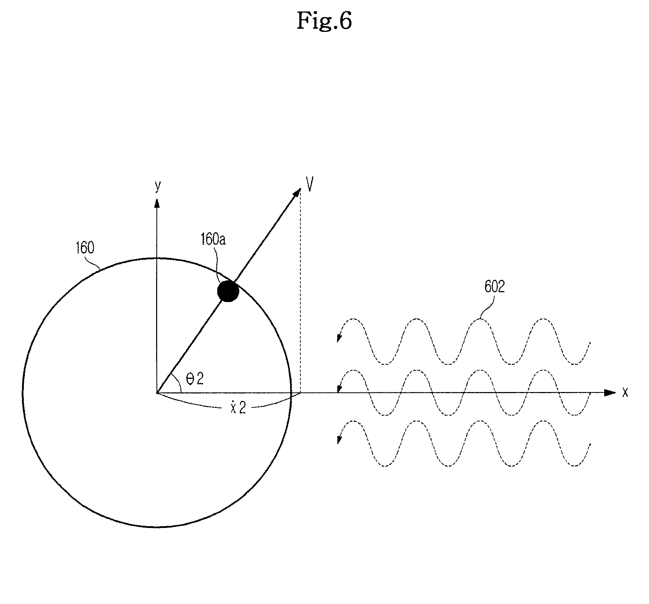

FIG. 6 is a view illustrating the detection of direction by observing the Doppler shift during the movement of the robot cleaner according to the first embodiment of the present invention. In FIG. 6, the X-axis is parallel to the traveling direction of the radio waves 602 transmitted from the transmitter 150 of the docking station 102, and a vector V is a vector indicating the traveling direction and the velocity of the robot cleaner 100. In this case, an angle $\theta_2$ between the traveling direction of the robot cleaner 100 and the propagation direction of the radio waves 602 may be expressed by the following formula 3.

[Formula 3]

$$\theta_2 = \cos^{-1}\left(\frac{\dot{x}_2}{|V|}\right)$$

where, in the formula 3, $\dot{x}_2$ is an X-directional linear velocity of the vector V, and $|V|$ is a magnitude (that is, speed) of the vector V. Since the linear velocity $\dot{x}_2$ may be obtained in the same way as obtaining $v^0(= \dot{x}_1)$ from the formula 2, and the controller 214 knows the speed $|V|$ of the robot cleaner 100, the angle $\theta_2$ may be obtained from the linear velocity $\dot{x}_2$ and the speed $|V|$. Thus, when the direction of the vector V is oriented to the front side of the robot cleaner 100, and the angle $\theta_2$ is known, the front side of the robot cleaner 100 moves by being rotated by $-\theta_2$, so that the robot cleaner 100 travels along the X-axis and may return to the signal source, that is, the docking station 102.

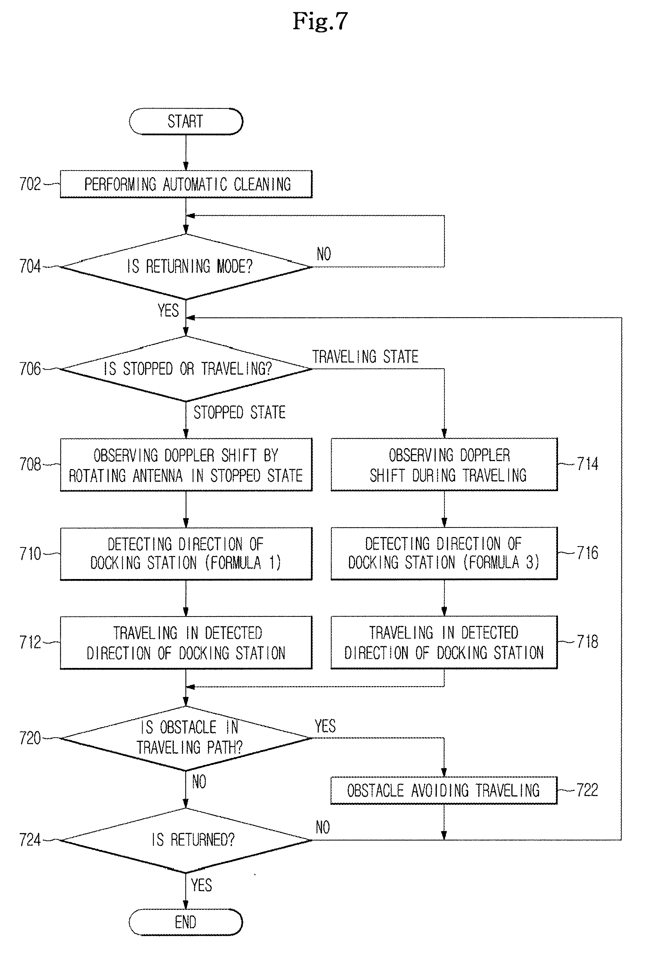

FIG. 7 is a flowchart illustrating a control method of the robot cleaner system according to the first embodiment of the present invention. As shown in FIG. 7, the robot cleaner 100 automatically cleans the area to be cleaned while spontaneously traveling (702). When the foreign substances need to be discharged during the automatic cleaning because of an accumulation of the suctioned foreign substances, to charge the battery because of the decreased capacity of the battery, or to finish the cleaning, the controller 214 switches the operating mode of the robot cleaner 100 into a returning mode for returning the robot cleaner 100 to the docking station 102 (704). When the operating mode of the robot cleaner 100 is switched to the returning mode ('YES' of 704), the controller 214 determines whether the robot cleaner 100 is traveling or stopped at the present time (706).

If the robot cleaner 100 is stopped at the present time, the antennas 160a to 160d are rotated such that the Doppler shift is observed by detecting the frequency of the radio waves received by the rotating antennas 160a to 160d (708). The observation of the Doppler shift is applied to formula 1 in connection with FIG. 5 to detect the direction toward the docking station 102, that is, the signal source (710). When the direction of the docking station 102 is detected, the controller 214 controls the traveling direction of the robot cleaner 100 such that the robot cleaner 100 may travel toward the docking station 102 (712).

On the other hand, when the robot cleaner 100 is traveling at the present time, the Doppler shift, caused by the relative movement between the antennas 160a to 160d and the transmitter 150 due to the traveling of the robot cleaner 100, is observed (714). This observation of the Doppler shift is applied to the formula 3 described in connection with FIG. 5 to detect the direction toward the docking station 102, that is, the signal source (716). When the direction toward the docking station 102 is detected, the controller 214 controls the traveling direction of the robot cleaner 100 such that the robot cleaner 100 may travel in the detected direction of the docking station 102 (718).

The robot cleaner 100 determines whether there is an obstacle in a path to travel toward the docking station 102 during the traveling (720). When there is an obstacle in the traveling path ('YES' of 720), an obstacle avoiding traveling is performed (722). Moreover, since the direction information of the docking station 102 may be missed during the obstacle avoiding traveling, the controlling is returned to a controlling block 706 to acquire new direction information of the docking station 102 and to try to return to the docking station 102. If there is no obstacle in the traveling path ('NO' of 720), the robot cleaner 100 travels according to the present direction information to return to the docking station 102, and the returning mode is completed when the returning is finished (724). After the returning mode, according to the purpose of returning to the docking station, the foreign substances are discharged, the battery is charged, or the standby mode is performed.

In the robot cleaner system according to the embodiment of the present invention, the installation position of the transmitter (signal source) for generating a signal of a predetermined frequency is not limited to only the docking station 102. In other words, plural transmitters are installed at several positions in the cleaning area, and a specific transmitter is controlled to transmit the radio waves as needed so that the robot cleaner 100 may be guided to the installation position of the corresponding transmitter. By applying this, it is convenient to guide the robot cleaner 100 to clean a specific area in a building in which several sectors are distinguished.

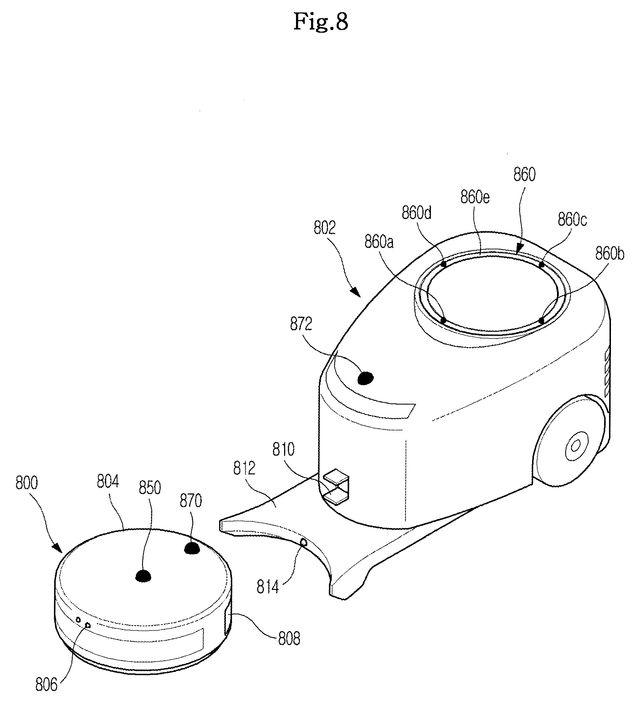

FIG. 8 is a perspective view illustrating a robot cleaner system according to a second embodiment of the present invention. As shown in FIG. 8, the robot cleaner system includes a robot cleaner 800 and a docking station 802. The robot cleaner 800 travels in an indoor space and suctions foreign substances on a floor using a suctioning force caused by the rotation of a fan and/or static electricity caused by a charging device to clean the floor, and the docking station 802 is provided to charge a battery of the robot cleaner 800 and to discharge the foreign substances therefrom.

In the lower side of a robot main body 804, electrically driven wheels (not shown) are installed to enable the robot cleaner 800 to travel. The wheels are driven by a driving motor (not shown) such that the robot cleaner 800 may perform a linear traveling and rotating. Moreover, in the outer side of the robot main body 804, an obstacle detecting sensor 806, such as an infrared sensor or an ultrasonic sensor, is installed such that the robot cleaner 800 may avoid obstacles during the traveling. In the side of the robot main body 804, an opening 808 is formed to transfer the suctioned foreign substances accumulated in the robot cleaner 800 to the docking station 802. The opening 808 is coupled with a suctioning port 810 of the docking station 802 so that the robot cleaner 800 discharges the foreign substances into the docking station 802.

In the front side of the docking station 802, a guide member 812 is provided to guide the docking of the robot cleaner 800. The guide member 812 is provided with a connecting terminal 814 for charging the battery provided in the robot cleaner 800.

The robot cleaner 800 spontaneously travels and automatically cleans the cleaning area, and when the suctioned foreign substances must be discharged because of excessive quantity of the suctioned foreign substances, the battery must be recharged because of decreased capacity of the battery, or the cleaning is finished, the robot cleaner 800 returns to the docking station 802 and performs a desired job (such as discharging of the foreign substances, recharging the battery, awaiting a next job, or the like). In order to return from a certain place distant from the docking station 802 to the docking station 802, the robot cleaner 800 must obtain at least direction information of the docking station 802. In the robot cleaner system according to the embodiment of the present invention, the Doppler shift is utilized such that the robot cleaner 800 obtains the direction information of the docking station 802. In other words, based on the Doppler shift observed at a receiving side for receiving a signal when transmitting and receiving the signal between the robot cleaner 800 and the docking station 802, the direction information of the transmitting side is obtained, and the traveling direction and a position of the robot cleaner 800 are controlled based on the direction information.

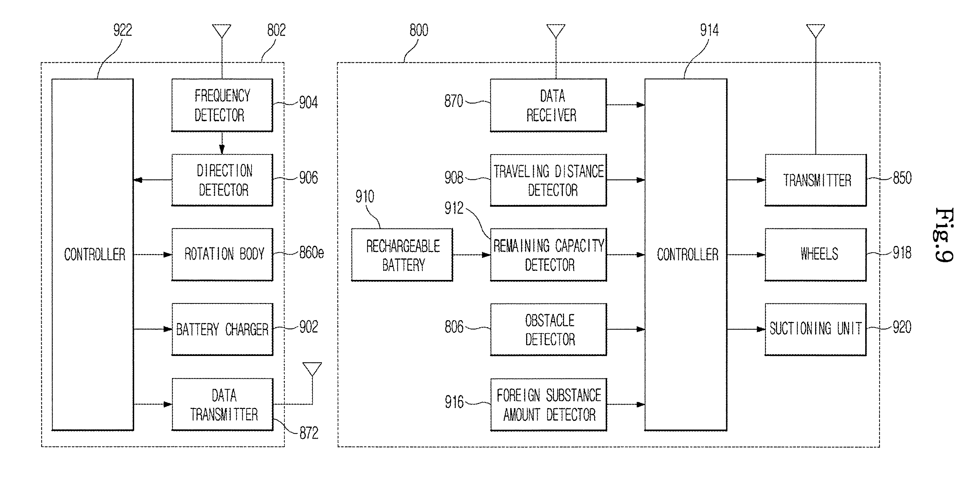

To this end, the robot cleaner 800 of the robot cleaner system in FIG. 8 is provided with a transmitter 850 for transmitting radio waves of a predetermined frequency, and the docking station 802 is provided with a receiving unit 860 for receiving the radio waves transmitted from the transmitter 850 of the robot cleaner 800. Needless to say, sound waves may be used instead of the radio waves. The receiving unit 860 of the docking station 802 includes four antennas 860a to 860d installed on a ring-shaped rotation body 860e with uniform intervals therebetween. As the rotation body 860e rotates at a preset velocity, the four antennas 860a to 860d travel along a predetermined track. The shape of the rotation body 860e for traveling the antennas 860a to 860d is not restricted to the ring-shape, but any usable shape may be employed to enable the antennas 860a to 860d to travel along the predetermined track. The receiving unit 860, as shown in FIG. 8, further includes a frequency detecting unit and a direction detecting unit, in addition to the antennas 860a to 860d, and the rotation body 860e. The frequency detecting unit and an observing unit will be described in the description of FIG. 9.

Moreover, the docking station 802 is provided with a data transmitter 872, and the robot cleaner is provided with a data receiver 870. The data transmitter 872 of the docking station 802 is to transmit a data signal from the docking station 802 to the robot cleaner 800, and the data receiver 870 of the robot cleaner 800 is to receive the data signal transmitted from the docking station 802.

FIG. 9 is a block diagram illustrating a control system of the robot cleaner system in FIG. 8. As shown in FIG. 9, the docking station .802 includes a controller 922, a frequency detector 904, a direction detector 906, the rotation body 860e, a battery charger 902, and a data transmitter 872. The frequency detector 904 receives radio waves of a predetermined frequency transmitted from the transmitter 850 of the robot cleaner 800 and detects the frequency of the received radio waves. Since the antennas 860a to 860d of the docking station 802 move, a frequency (Doppler frequency) of the radio waves actually detected by the antennas 860a to 860d may have a value different from the frequency (original frequency) of the radio waves transmitted from the transmitter 850 according to the positions of the antennas 860a to 860d due to the Doppler shift. The direction detector 906 detects a direction toward the transmitter 850 of the robot cleaner 800 (that is, a direction toward a place where the radio waves are transmitted), based on the frequency detected by the frequency detector 904, and provides the direction information to the controller 922. The rotation body 860e is one of components of the receiving unit 860 described in connection with FIG. 8 and moves the antennas 860a to 860d along a predetermined track. The battery charger 902 converts commercial alternating current power inputted from the exterior into electric power for charging a rechargeable battery 910 of the robot cleaner 800 such that the battery 910 of the robot cleaner 800 may be recharged. The data transmitter 872, as described in connection with FIG. 8, is to transmit a data signal from the docking station 802 to the robot cleaner 800. Particularly, when the docking station 802 detects the direction toward the robot cleaner 800 and a distance thereto by observing the Doppler shift, the data signal containing the direction toward and the distance to the robot cleaner 800 is transmitted from the data transmitter 872 to the robot cleaner 800 such that the robot cleaner 800 may obtain the position thereof and a distance from the docking station 802.

The control system of the robot cleaner 800 includes a controller 914 for controlling whole operation of the robot cleaner 800. An input side of the controller 914 is electrically connected to a data receiver 870, a traveling distance detector 908, a remaining capacity detector 912, an obstacle detector 806, and a foreign substance amount detector 916 to be communicated with the controller 914. The data receiver 870, as described in connection with FIG. 8, is to receive the data signal transmitted from the docking station 802. The traveling distance detector 908 detects a traveling distance of the robot cleaner 800 and provides the same to the controller 914. The traveling distance of the robot cleaner 800 may be obtained by detecting the revolution of the wheels 918 by an encoder. The remaining capacity detector 912 detects the remaining capacity of the battery 910 and provides information about the remaining capacity to the controller 914. When the battery 910 must be charged because of a small remaining capacity of the battery, the controller 914 controls the robot cleaner 800 to stop performing a job at the present time and to return to the docking station 802 such that the battery 910 is recharged. The obstacle detector 806 detects whether an obstacle is present in front of the robot cleaner 800 during the traveling and provides information about the obstacle to the controller 914. The controller 914 changes the traveling path based on the obstacle information to bypass the robot cleaner 800 around the obstacle so that the robot cleaner 800 does not stop the traveling due to the obstacle. The foreign substance amount detector 916 detects the quantity of the foreign substances gathered in the robot cleaner 800 and provides information about the amount of the gathered foreign substances to the controller 914. The controller 914 checks the amount of the foreign substances in the robot cleaner 800 at the present time through the foreign substance amount information, and controls the robot cleaner 800 such that, when the quantity of the foreign substances reaches the maximal quantity of the foreign substances that the robot cleaner 800 can accommodate, the cleaning is stopped and the robot cleaner 800 returns to the docking station 802 to discharge the foreign substances.

To the output side of the controller 914, the transmitter 850, the wheels 918, and a suctioning unit 920 are connected. The transmitter 850, as described in connection with FIG. 8, transmits radio waves of a predetermined frequency. The wheels 918 are provided to move the robot cleaner 800 and include driving wheels for advancing and reversing and a direction changing wheel for changing a traveling direction. The suctioning unit 920 faces the lower side of the robot cleaner 800 and suctions the foreign substances on the floor in the cleaning area to accommodate the suctioned foreign substances in an accommodating space of the robot cleaner 800.

In the robot cleaner system depicted in FIG. 9, the direction of the transmitter 850 is detected by using the Doppler shift observed during the reception of the radio waves transmitted from the transmitter 850. In this case, the principle of the direction detection is identical to the description of FIGs. 3 to 5.

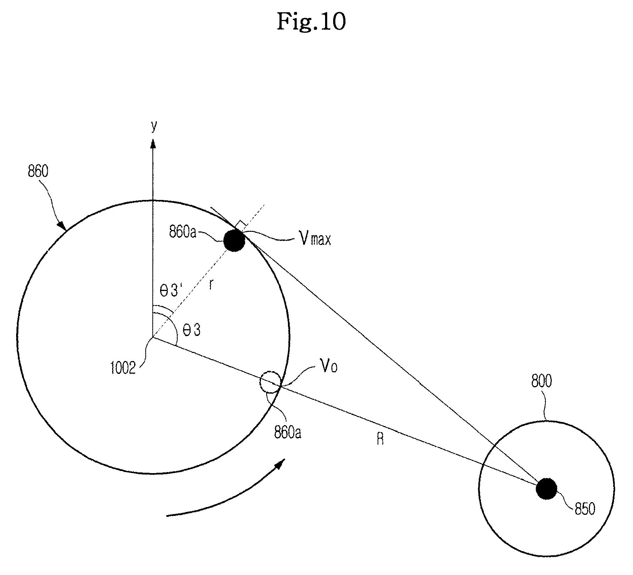

FIG. 10 is a view illustrating detection of a distance and a direction by observing the Doppler shift in the robot cleaner system according to the second embodiment of the present invention. In FIG. 10, the Y-axis is a reference direction preset in the docking station. First, an angle $\theta_3$ is obtained according to the method described in connection with FIG. 5, and the formulas 1 and 2 to detect the direction of the robot cleaner 800, and a distance R from a center point 1002 of the receiving unit 860 of the docking station 802 to the transmitter 850 of the robot cleaner 800 using the following Formula 3.

### Formula 3

$$R = \frac{r}{\cos(\theta_3 - \theta'_3)}$$

In the formula 3, r is a distance from the central point 1002 of the receiving unit 860 to the antenna (for example, 860a), $\theta_3$ is an angle between the reference direction (Y-axis) and the direction of the robot cleaner 800, and $\theta'_3$ is an angle between the reference direction (Y-axis) and the direction in which the antenna 860a moves.

In FIG. 10, a position Vmax where the antenna 860a is positioned corresponds to a point b in FIG. 3 so that the antenna 860a has a maximal velocity in the direction of going away from the transmitter 850, and is a point where the frequency of the radio waves received by the antenna 860a at this point is decreased by a maximal degree because the traveling direction of the radio waves is parallel to the traveling direction of the antenna 860a. Moreover, a point $V_0$ that is indicated by a dotted line and where the antenna 860a is positioned corresponds to the point a in FIG. 3, so that there is not the relative movement between the antenna 860a and the transmitter 850, and is a point where the Doppler shift is not observed because the traveling direction of the radio waves is perpendicular to the traveling direction of the antenna 860a, and the frequency of the radio waves received by the antenna 860a is identical to the frequency of the transmitted radio wave.

When the direction of the transmitter 850 and the distance R between the transmitter 850 and the receiving unit 860 are obtained from the formulas 1 to 3, the controller 922 of the docking station 802 transmits the direction information and the distance information to the robot cleaner 800 through the data transmitter 872. The controller 914 of the robot cleaner 800 receives the direction information and the distance information through the data receiver 870 and controls the traveling and the position of the robot cleaner 800 based on the received direction information and distance information.

For example, in a case of requiring the robot cleaner 800 to return to the docking station 802 when the distance between the docking station 802 and the robot cleaner 800 and the direction are obtained in the same method as described above and are provided to the robot cleaner 800, the robot cleaner 800 travels based on the distance information and the direction information so that the return to the docking station 802 is quickly and precisely performed.

In another example, when contaminants must be quickly removed in a specific position in the area to be cleaned by the robot cleaner 800 and the robot cleaner 800 is demanded to move to the corresponding position, using the distance between the docking station 802 and the robot cleaner 800 and the direction thereof, a present coordinate of the robot cleaner 800 is obtained and is compared with the coordinate of the specific position to which the robot cleaner 800 moves to estimate a necessary traveling path such that the robot cleaner 800 travels along the estimated traveling path. Thus, the robot cleaner 800 can quickly and precisely move to the target position.

The obtaining of a coordinate of a certain position is enabled by which the robot cleaner 800 obtains and stores its own distance and direction with respect to the docking station 802 while traveling the whole cleaning area uniformly and sets a coordinate value corresponding to the stored distance and direction. After that, when the robot cleaner 800 must move to the corresponding coordinate because of setting a certain coordinate, the robot cleaner 800 moves to a position satisfying the distance information and the direction information corresponding to the coordinate.

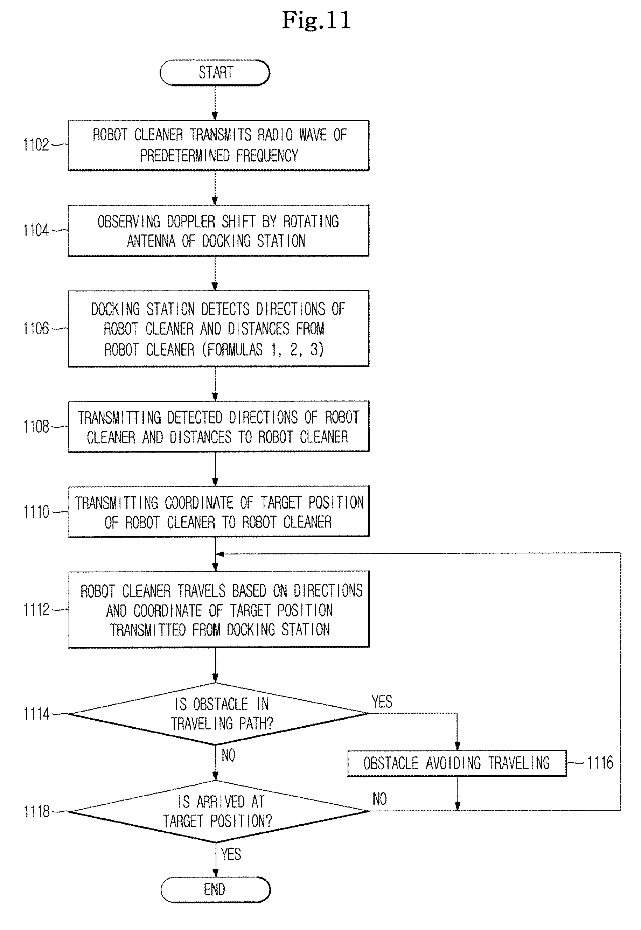

FIG. 11 is a flowchart illustrating a control method of the robot cleaner system according to the second embodiment of the present invention, and illustrates a method of controlling the robot cleaner 800 to move to a target coordinate by transmitting the present position (distance and direction) and the target coordinate of the robot cleaner when the robot cleaner 800 must move from the present position to another position. As shown in FIG. 11, the robot cleaner 800 spontaneously travels the cleaning area or transmits radio waves of a predetermined frequency during the standby at a certain position (1102). Similarly, when the robot cleaner 800 moves from the present position to another position, the docking station 802 rotates the antennas 860a to 860d of the receiving unit 860 to obtain the direction of and the distance from the robot cleaner 800 (to the position of the docking station 802) and observes the Doppler shift of the received radio waves (1104). The docking station 802 substitutes the Doppler shift (variation of the frequency) observed by the receiving unit 860 into the formulas 1, 2, and 3 to detect the direction of and the distance from the robot cleaner 800 (1106).

The docking station 802 transmits the detected present direction information and distance information of the robot cleaner 800 to the robot cleaner 800 through the data transmitter 872 (1108). Moreover, the docking station 802 transmits the target coordinate of the position to which the robot cleaner 800 will move to the robot cleaner 800 through the data transmitter 872 (1110). The robot cleaner 800 receives the direction information and the distance information thereof, together with the target coordinate, transmitted from the docking station 802, through the data receiving unit 870 and moves to the position of the target coordinate based on the information (1112).

The robot cleaner 800 determines whether there is an obstacle in the traveling path during the traveling to the target position (1114). If there is an obstacle in the traveling path ('YES' in 1114), an obstacle avoiding traveling is performed (1116). Moreover, since the direction information of the target position may be missed during the obstacle avoiding traveling, the controlling is returned to the block 712 to set a new traveling direction based on the coordinate of the target position. If there is no obstacle in the traveling path ('NO' in 1114), the robot cleaner 800 moves to the target position according to the present direction information, and the movement is stopped when arriving at the target position (1118). After the arrival, the foreign substances are discharged, the battery is charged, the automatic cleaning is performed, or the standby mode is performed according to the purpose of the traveling.

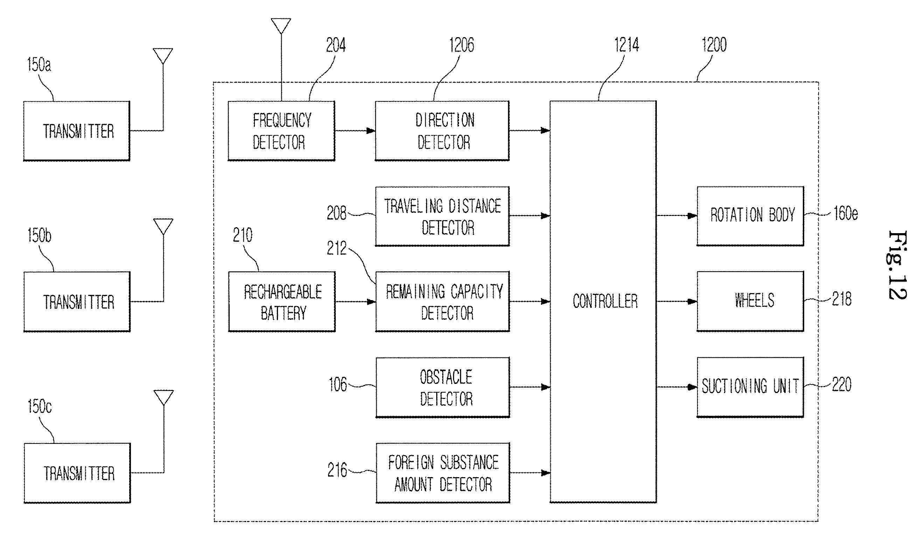

FIG. 12 is a block diagram illustrating a control system of a robot cleaner system according to a third embodiment of the present invention. The robot cleaner system depicted in FIG. 12 is implemented by basically employing the structure of the robot cleaner in FIG. 1 and configuring the structures and functions of a controller 1214 and a direction detector 1206 of a robot cleaner 1200 in order to achieve the aspect of the third embodiment of the present invention, and adding the number of transmitters 150a to 150c.

The plural transmitters 150a to 150c for transmitting radio waves of predetermined frequencies are not limited to being installed in the docking station 102, but plural stations, respectively, including a transmitter and other peripheral circuits, may be installed within a working area in which the robot cleaner 1200 works regardless of position and number thereof. However, in a case of installing the transmitters 150a to 150c in the working area of the robot cleaner 1200, the transmitters 150a to 150c are generally installed at predetermined positions such that the positions are adopted as reference positions when the robot cleaner 1200 determines its own position. In this embodiment, the respective transmitters 150a to 150c transmit respective radio waves (or sound waves) of frequencies different from each other, and the robot cleaner 1200 distinguishes the respective transmitters 150a to 150c using the different natural frequencies of the radio waves transmitted from the transmitters 150a to 150c.

As shown in FIG. 12, a control system of the robot cleaner 1200 includes the controller 1214 for controlling whole operation of the robot cleaner 1200. An input side of the controller 1214 is electrically connected to a frequency detector 204, a direction detector 1206, a traveling distance detector 208, a remaining capacity detector 212, an obstacle detector 106, and a foreign substance amount detector 216 that communicate with the controller 1214. The frequency detector 204 receives the radio waves of the natural frequencies transmitted from the respective transmitters 150a to 150c and detects the frequencies of the received radio waves. Since the antennas 160a to 160d of the robot cleaner 1200 move along the circular track, the frequencies (Doppler frequencies) of the radio waves actually detected by the antennas 160a to 160d may have values different from the frequencies (original frequencies) of the radio waves transmitted from the transmitters 150a to 150c according to the positions of the antennas 160a to 160d due to the Doppler shift. The direction detector 1206 detects directions toward the respective transmitters 150a to 150c (that is, directions toward places from which the radio waves are transmitted), based on the frequencies detected by the frequency detector 204, and provides the direction information of the corresponding transmitters 150a to 150c to the controller 1214. The traveling distance detector 208 detects a traveling distance of the robot cleaner 1200 and provides the same to the controller 1214. The traveling distance of the robot cleaner 1200 may be obtained by detecting the revolution of the wheels 218 by an encoder. The remaining capacity detector 212 detects the remaining capacity of the battery 1210 and provides information about the remaining capacity to the controller 1214. When the battery 1210 must be charged because of a small remaining capacity of the battery, the controller 1214 controls the robot cleaner 1200 to stop performing a job at the present time and to return to the docking station 102 such that the battery 1210 is recharged. The obstacle detector 106 detects whether an obstacle is present in front of the robot cleaner 1200 during the traveling and provides information about the obstacle to the controller 1214. The controller 1214 changes the traveling path based on the obstacle information to bypass the robot cleaner 1200 around the obstacle so that the robot cleaner 1200 does not stop traveling due to the obstacle. The foreign substance amount detector 216 detects the quantity of the foreign substances gathered in the robot cleaner 1200 and provides information about the amount of the gathered foreign substances to the controller 1214. The controller 1214 checks the amount of the foreign substances in the robot cleaner 1200 at the present time through the foreign substance amount information, and controls the robot cleaner 1200 such that, when the quantity of the foreign substances reaches the maximal quantity of the foreign substances that the robot cleaner 100 can accommodate, the cleaning is stopped and the robot cleaner 1200 returns to the docking station 102 to discharge the foreign substances.

To the output side of the controller 1214, the rotation body 160e, the wheels 218, and a suctioning unit 220 are connected. The rotation body 160e is one of components of the receiving unit 160 described in connection with FIG. 1 and moves the antennas 160a to 160d along a predetermined track. The wheels 218 are provided to move the robot cleaner 1200 and include driving wheels for advancing and reversing and a direction changing wheel for changing a traveling direction. The suctioning unit 220 faces the lower side of the robot cleaner 1200 and suctions the foreign substances on the floor in the cleaning area to accumulate the suctioned foreign substances in an accommodating space of the robot cleaner 1200.

The wheels 218 including driving wheels and the direction changing wheel allow the robot cleaner 1200 to rotate in a stopped state. Thus, if using the operational property of the robot cleaner 1200, the antennas 160a to 160d may be rotated by rotating the robot cleaner 1200 instead of using the rotation body 160e of the receiving unit 160.

In the robot cleaner system depicted in FIG. 12, the respective directions of the transmitter 150a to 150c are detected using the Doppler shift observed during the reception of the radio waves transmitted from the transmitters 150a to 150c. The principle of detecting the direction used in this case is identical to that described in connection with FIGs. 3 to 5.

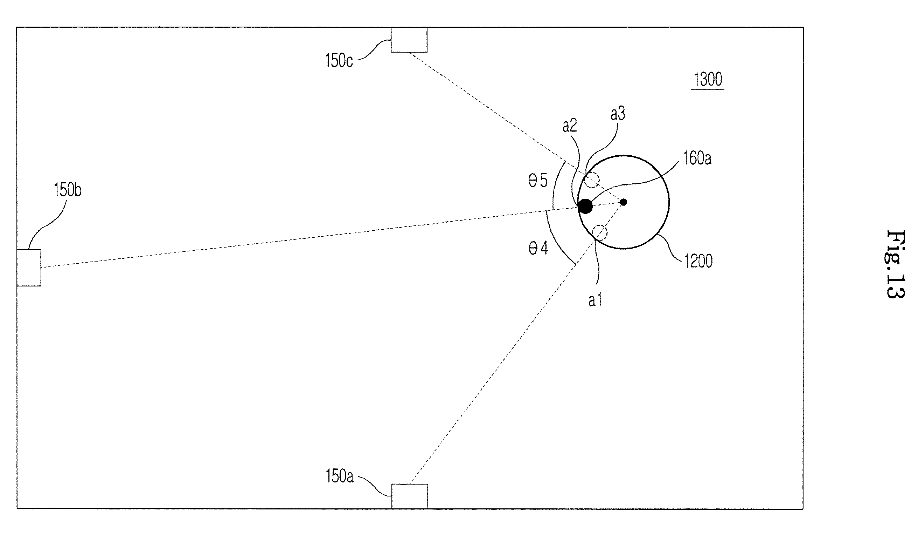

FIG. 13 is a view illustrating the detection of a position by observing the Doppler shift in the robot cleaner system according to the third embodiment of the present invention. As shown in FIG. 13, three transmitters 150a to 150c are installed at predetermined points within an area 1300 where the robot cleaner 1200 works and the respective transmitters 150a to 150c transmit radio waves of natural frequencies different from each other. The robot cleaner 1200 receives the radio waves of the natural frequencies transmitted from the respective transmitters 150a to 150c by rotating the antennas 160a to 160d and observes the Doppler shift of the received radio waves so as to obtain the directions from the present position of the robot cleaner 120 with respect to the respective transmitters 150a to 150c, and detects angles $\theta_4$ and $\theta_5$ from the directions.

In other words, three points a1, a2, and a3 of the antenna (for example, 160a) of FIG. 13 are positions corresponding to the point a of FIG. 3 where the Doppler shift is not observed from the radio waves transmitted from the three transmitters 150a to 150c. Thus, since the Doppler shift of the radio waves transmitted from the transmitter 150a and received by the antenna 160a is 0 (zero) when the antenna 160a is positioned at the point a1, the direction of the transmitter 150a may be obtained. In the same way, the direction of another transmitter 150b may be obtained when the antenna 160a is positioned at the point a2, and the direction of the remaining transmitter 150c may be obtained when the antenna 160a is positioned at the point a3. When the direction information of the three transmitters 150a to 150c is obtained, the angles $\theta_4$ and $\theta_5$ can be obtained from the information, and the formulas 1 and 2 may be used to obtain the directions of the respective transmitters 150a to 150c as described above.

As such, if three transmitters 150a to 150c were installed and the directions of the respective transmitters 150a to 150c with respect to the robot cleaner 1200 using the Doppler shift are observed when receiving the radio waves transmitted from the three transmitters 150a to 150c, the present position of the robot cleaner 1200 may be obtained. In other words, if only two transmitters (for example, 150a and 150b) are used, the angle $\theta_4$ may be obtained. However, since there are so many positions, on a predetermined curved line within the area 1300,

where the angle $\theta_4$ is formed between the two transmitters 150a and 150b and the robot cleaner 1200, the precise position of the robot cleaner 1200 cannot be obtained from only a single angle. Thus, when another transmitter 150c is added to obtain the angle $\theta_5$, a single intersecting point between a curved line satisfying the angle $\theta_4$ and a curved line satisfying the angle $\theta_5$ is obtained by taking the angles $\theta_4$ and $\theta_5$ into consideration, and the intersecting point becomes the present position of the robot cleaner 1200. Consequently, when at least three transmitters 150a to 150c installed at different positions are used, the present position of the robot cleaner 1200 may be precisely obtained.

As such, when the present position of the robot cleaner 1200 is obtained, the coordinate of the target position to which the robot cleaner 1200 moves is provided to the robot cleaner 1200 so that the robot cleaner 1200 may move to the position corresponding to the coordinate. To this end, the controller 1214 of the robot cleaner 1200 typically includes a look-up table for providing coordinate information according to the respective positions within the area 1300.

The obtaining of the coordinate of a certain position within the area 1300 may be implemented by setting coordinates corresponding to the angles $\theta_4$ and $\theta_5$ that are varied according to the position when the robot cleaner 1200 uniformly travels the area 1300. After that, when the coordinate of a certain position is set and the robot cleaner 1200 must move to the position corresponding to the coordinate, the robot cleaner 1200 just moves to a position satisfying the angles $\theta_4$ and $\theta_5$ corresponding to the coordinate.

In FIG. 13, when determining the different frequencies of the radio waves transmitted from the three transmitters 150a to 150c, it is necessary to take the rotation speed of the rotation body 160e of the receiving unit 160 installed in the robot cleaner into consideration. Since the robot cleaner 1200 distinguishes the respective directions of the three transmitters 150a to 150c using the frequencies of the radio waves received by the receiving unit 160, the directions of the respective transmitter 150a to 150c may be determined by distinguishing the natural frequencies of the respective transmitters 150a to 150c only when broadband between the maximal increase and the maximal decrease of the frequencies of the radio waves to be actually observed by the antennas 160a to 160c of the receiving unit 160 are not overlapped with each other according to the radio waves of the transmitters 150a to 150c.

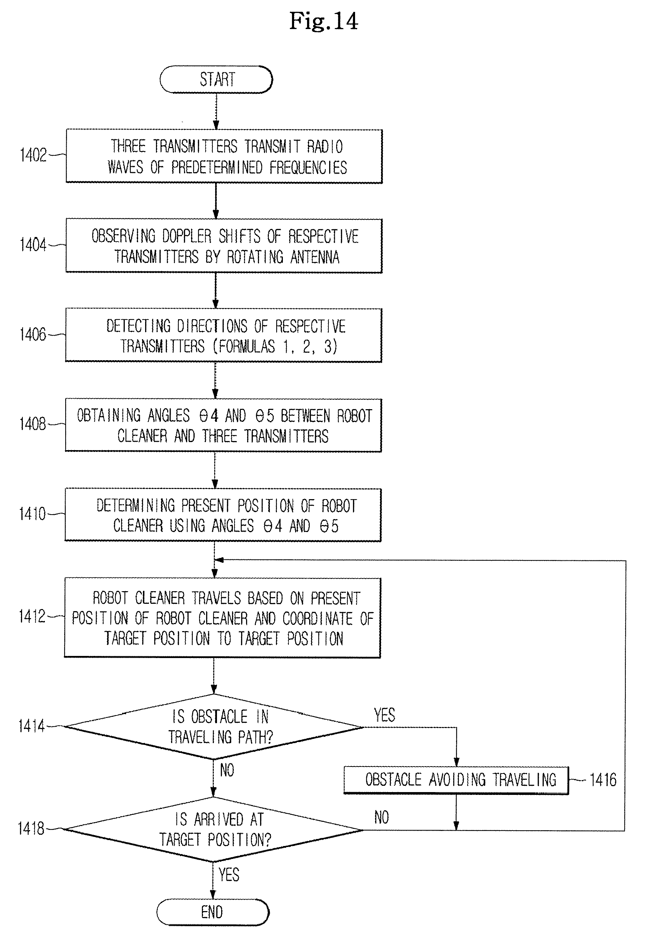

FIG. 14 is a flowchart illustrating a control method of the robot cleaner system according to the third embodiment of the present invention and illustrates a method of controlling the robot cleaner 1200 to move the target position based on information about the present position of the robot cleaner 1200 when the robot cleaner 1200 must move from the present position to another position. As illustrated in FIG. 14, the robot cleaner 1200 receives the radio waves of different frequencies transmitted from the three transmitters 150a to 150c while spontaneously traveling the cleaning area or being in the standby state (1402). In this case, the robot cleaner 1200 rotates the antennas 160a to 160c of the receiving unit 160 to observe the Doppler shifts of the respective radio waves in order to obtain the present position thereof (1404). The robot cleaner 1200 substitutes the Doppler shifts (variations of frequencies) observed by the receiving unit 160 into the formulas 1 and 2 to detect the directions of the respective transmitters 150a to 150c (1406). The robot cleaner 1200 obtains the angles $\theta_4$ and $\theta_5$ of FIG. 13 from the direction information of the transmitters 150a to 150c (1408), and determines the present position of the robot cleaner 1200 using the angles $\theta_4$ and $\theta_5$ (1410).

If the robot cleaner 1200 must move to any position within the area 1300, the robot cleaner 1200 moves to the target position based on the present position thereof and the coordinate of the target position (1412).

The robot cleaner 1200 checks whether an obstacle exists in the traveling path during the traveling (1414). If there is an obstacle in the traveling path ('YES' of 1414), the obstacle avoiding traveling is performed (1416). Moreover, since the direction information of the target position may be missed during the obstacle avoiding traveling, the controlling is returned to a controlling block 712 to set new traveling direction based on the coordinate of the target position. If there is no obstacle in the traveling path ('NO' of 1414), the robot cleaner 1200 travels according to the present direction information to the target position and the movement is completed when arriving at the target position (1418).

After the arrival, the foreign substances are discharged, the battery is charged, the automatic cleaning is performed, or the standby mode is performed according to the purpose of the traveling.

According to the robot cleaner system of the present invention and the control method thereof, the relative position between the robot cleaner and the station is obtained using the Doppler shift observed by inexpensive equipment instead of a vision system requiring expensive equipment such as a camera so that manufacturing costs of the robot cleaner may be reduced.

Moreover, according to the robot cleaner system of the present invention and the control method thereof, the robot cleaner system may be controlled over a relatively wider area than a case of using the RF signal or the vision system so that the detection area between the robot cleaner and the station may be significantly expanded.

Additionally, in the robot cleaner system of the present invention and the control method thereof, in order to solve the problem of incorrectly detecting a position and a direction due to an obstacle when using the RF signal or the vision system, the Doppler shift in which the influence of the obstacle is relatively weak is used so that the precise detection of the position and the direction between the robot cleaner and the station is enabled.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A robot cleaner system comprising:

   a robot cleaner; and
   a station;

   wherein one of the robot cleaner and the station transmits a signal of a predetermined frequency and the other receives the signal so that a direction toward a transmitting side for transmitting the signal is detected based on a Doppler shift observed by a receiving side for receiving the signal.

2. The robot cleaner system according to claim 1, wherein the station comprises a transmitter to transmit the signal of the predetermined frequency,

   the robot cleaner comprises a movable receiving unit installed to receive the signal transmitted from the transmitter of the station and to observe the Doppler shift of the received signal, and a direction of the station is detected based on the Doppler shift observed by the receiving unit.

3. The robot cleaner system according to claim 2, wherein the receiving unit comprises an antenna to receive the signal transmitted from the station.

4. The robot cleaner system according to claim 3, wherein movement of the receiving unit is movement of the antenna of the receiving unit along a rotation track in which the robot cleaner rotates in a stopped state.

5. The robot cleaner system according to claim 3, wherein the receiving unit further comprises a rotation body provided to rotate in the robot cleaner and in which the antenna is installed, and

   movement of the receiving unit is movement of the antenna of the receiving unit along a rotation track of the rotation body due to the rotation of the rotation body.

6. The robot cleaner system according to claim 3, wherein movement of the receiving unit is movement of the antenna along a traveling track of the robot cleaner in which the robot cleaner travels by a predetermined displacement.

7. The robot cleaner system according to claim 3, wherein the receiving unit further comprises:

   a frequency detector to detect the frequency of the signal received by the receiving unit; and a direction detector to detect a direction in which the station is positioned by comparing the frequency detected by the frequency detector and the frequency of the signal transmitted from the station and to generate direction information.

8. The robot cleaner system according to claim 7, wherein the direction detector determines a direction indicated by the antenna when the Doppler shift is not observed from the frequency detected by the frequency detector as the direction in which the station is positioned.

9. The robot cleaner system according to claim 3, wherein, when the Doppler shift is observed as the antenna moves along one of a rotation track of the robot cleaner and a rotation track of the rotation body, an angle $\theta_1$ between a forward direction of the robot cleaner and a direction in which the station is positioned is expressed by the following formula,

$$\theta_1 = \sin^{-1}\left(\frac{\dot{x}_1}{r\dot{\theta}_1}\right)$$

   where, r is a distance from one of rotation axes of the rotation body and the robot cleaner to the antenna, $\dot{\theta}_1$, is an angular velocity of $\theta_1$, and $\dot{x}_1$ is a linear velocity of the antenna in the direction parallel to the traveling direction of the signal when the antenna traveling along the rotation track is positioned in the forward direction of the robot cleaner.

10. The robot cleaner system according to claim 3, wherein, when the Doppler shift is observed as the antenna moves by a traveling track along a predetermined displacement of the robot cleaner, an angle $\theta_2$ between the forward direction of the robot cleaner and the direction in which the station is positioned is expressed by the formula,

$$\theta_2 = \cos^{-1}\left(\frac{\dot{x}_2}{|V|}\right)$$

   where, $\dot{x}_2$ is an X-directional linear velocity of a vector V indicating a traveling displacement of the robot cleaner, the X-direction is parallel to a traveling direction of the signal transmitted from the station, and $|V|$ is a magnitude (speed) of the vector V.

**11.** The robot cleaner system according to claim 3, wherein, when a number of the antenna is two or more, the antennas are installed at predetermined intervals.

**12.** The robot cleaner system according to claim 1, wherein the station comprises a docking station to charge the robot cleaner and discharge foreign substances.

**13.** A control method of a robot cleaner system comprising a robot cleaner and a station, the control method comprising:

transmitting a signal of a predetermined frequency from one of the robot cleaner and the station wherein the signal is received by the other; and
detecting a direction of a position of a transmitting side that transmits the signal based on a Doppler shift observed by a receiving side that receives the signal.

**14.** The control method of a robot cleaner system according to claim 13, wherein the station transmits the signal of the predetermined frequency via a transmitter,

the robot cleaner receives the signal transmitted from the station via a receiving unit,
the receiving unit determines whether the Doppler shift is observed, and
the direction in which the station is positioned is detected based on the observation of the Doppler shift.

**15.** The control method of a robot cleaner system according to claim 14, wherein the receiving unit comprises an antenna to receive the signal transmitted from the station.

**16.** The control method of a robot cleaner system according to claim 15, wherein movement of the receiving unit is movement of the antenna of the receiving unit along a rotation track in which the robot cleaner rotates in a stopped state.

**17.** The control method of a robot cleaner system according to claim 15, wherein the receiving unit further comprises a rotation body provided to rotate in the robot cleaner and in which the antenna is installed, and

movement of the receiving unit is movement of the antenna of the receiving unit along a rotation track of the rotation body due to the rotation of the rotation body.

**18.** The control method of a robot cleaner system according to claim 15, wherein movement of the receiving unit is movement of the antenna along a traveling track of the robot cleaner in which the robot cleaner travels by a predetermined displacement.

**19.** The control method of a robot cleaner system according to claim 15, wherein the direction detector determines a direction indicated by the antenna when the Doppler shift is not observed from the frequency detected by the frequency detector as the direction in which the station is positioned.

**20.** The control method of a robot cleaner system according to claim 15, wherein when the Doppler shift is observed as the antenna moves along one of a rotation track of the robot cleaner and a rotation track of the rotation body, an angle $\theta_1$ between a forward direction of the robot cleaner and a direction in which the station is positioned is expressed by the following formula,

$$\theta_1 = \sin^{-1}\left(\frac{\dot{x}_1}{r\dot{\theta}_1}\right)$$

where, r is a distance from one of rotation axes of the rotation body and the robot cleaner to the antenna, $\dot{\theta}_1$ is an angular velocity of $\theta_1$, and $\dot{x}_1$ is a linear velocity of the antenna in the direction parallel to the traveling direction of the signal when the antenna moving along the rotation track is positioned in the forward direction of the robot cleaner.

**21.** The control method of a robot cleaner system according to claim 15, wherein, when the Doppler shift is observed as the antenna moves by a traveling track along a predetermined displacement of the robot cleaner, an angle $\theta_2$ between the forward direction of the robot cleaner and the direction in which the station is positioned is expressed by the formula,

$$\theta_2 = \cos^{-1}\left(\frac{\dot{x}_2}{|V|}\right)$$

where, $\dot{x}_2$ is an X-directional linear velocity of a vector V indicating a traveling displacement of the robot cleaner, the X-direction is parallel to a traveling direction of the signal transmitted from the station, and $|V|$ is a magnitude (speed) of the vector V.

**22.** A robot cleaner system comprising:

a robot cleaner to transmit a signal of a predetermined frequency; and
a station comprising a movable receiving unit to receive the signal transmitted from the robot cleaner, to observe a Doppler shift of the received signal, and to detect a direction in which the robot cleaner is positioned and a distance from the robot cleaner based on the Doppler shift observed by the receiving unit.

**23.** The robot cleaner system according to claim 22, wherein the receiving unit comprises an antenna to receive the signal transmitted from the robot cleaner.

**24.** The robot cleaner system according to claim 23, wherein the receiving unit further comprises a rotation body provided to rotate in the station and in which the antenna is installed, and movement of the receiving unit is movement of the antenna of the receiving unit along a rotation track of the rotation body due to the rotation of the rotation body.

**25.** The robot cleaner system according to claim 23, wherein the receiving unit further comprises:

a frequency detector to detect the frequency of the signal received by the receiving unit; and
a direction detector to detect a direction in which the station is positioned by comparing the frequency detected by the frequency detector and the frequency of the signal transmitted from the robot cleaner and to generate direction information.

**26.** The robot cleaner system according to claim 25, wherein the direction detector determines a direction indicated by the antenna when the Doppler shift is not observed from the frequency detected by the frequency detector as the direction in which the robot cleaner is positioned.

**27.** The robot cleaner system according to claim 23, wherein, when the Doppler shift is observed as the antenna moves along a rotation track of the rotation body, an angle $\theta_1$ between a direction indicated by the antenna and a direction in which the robot cleaner is positioned is expressed by the following formula,

$$\theta_1 = \sin^{-1}\left(\frac{\dot{x}_1}{r\dot{\theta}_1}\right)$$

where, r is a distance from a rotation axis of the rotation body to the antenna, $\dot{\theta}_1$ is an angular velocity of $\theta_1$, and $\dot{x}_1$ is a linear velocity of the antenna in the direction parallel to the traveling direction of the signal when the antenna traveling along the rotation track is positioned in the indicated direction.

**28.** The robot cleaner system according to claim 23, wherein a distance R from a central point of the receiving unit to a transmitter of the robot cleaner is expressed by the following formula,

$$R = \frac{r}{\cos(\theta_3 - \theta_3')}$$

where, r is a distance from the central point of the receiving unit to the antenna, $\theta_3$ is an angle between a predetermined reference direction of the receiving unit and the direction in which the robot cleaner is positioned, and $\theta_3'$ is an angle between the reference direction and a direction in which the antenna is oriented.

**29.** The robot cleaner system according to claim 23, wherein, when a number of the antenna is two or more, the antennas are installed at predetermined intervals.

**30.** The robot cleaner system according to claim 22, wherein the station comprises a docking station to charge the robot cleaner and discharge foreign substances.

**31.** A control method of a robot cleaner system comprising:

transmitting a signal of a predetermined frequency from a robot cleaner;
receiving the signal transmitted from the robot cleaner by the station via a receiving unit;
determining whether a Doppler shift is observed by the receiving unit; and
detecting a direction in which the robot cleaner is positioned and a distance from the robot cleaner based on the Doppler shift.

**32.** The control method of a robot cleaner system according to claim 31, wherein the receiving unit comprises an antenna to recieve the signal transmitted from the robot cleaner.

**33.** The control method of a robot cleaner system according to claim 32, wherein the receiving unit further comprises a rotation body provided to rotate in the station and in which the antenna is installed, and movement of the receiving unit is movement of the antenna of the receiving unit along a rotation track of the rotation body due to the rotation of the rotation body.

**34.** The control method of a robot cleaner system according to claim 31, wherein the direction detector determines a direction indicated by the antenna when the Doppler shift is not observed from the frequency of the signal received by the receiving unit as the direction in which the robot cleaner is positioned.

**35.** The control method of a robot cleaner system according to claim 32, wherein, when the Doppler shift is observed as the antenna moves along a rotation track of the rotation body, an angle $\theta_1$ between a direction indicated by the antenna and a direction in which the robot cleaner is positioned is expressed by the following formula,

$$\theta_1 = \sin^{-1}\left(\frac{\dot{x}_1}{r\dot{\theta}_1}\right)$$

where, r is a distance from a rotation axis of the rotation body to the antenna, $\dot{\theta}_1$ is an angular velocity of $\theta_1$, and $\dot{x}_1$ is a linear velocity of the antenna in the direction parallel to the traveling direction of the signal when the antenna moving along the rotation track is positioned in the indicated direction.

**36.** The control method of a robot cleaner system according to claim 32, wherein a distance R from a central point of the receiving unit to a transmitter of the robot cleaner is expressed by the following formula,

$$R = \frac{r}{\cos(\theta_3 - \theta_3')}$$

where, r is a distance from the central point of the receiving unit to the antenna, $\theta_3$ is an angle between a predetermined reference direction of the receiving unit and the direction in which the robot cleaner is positioned, and $\theta_3'$ is an angle between the reference direction and a direction in which the antenna is oriented.

**37.** A robot cleaner system comprising:

at least three transmitters to transmit signals of predetermined natural frequencies different from each other; and
a station comprising a movable receiving unit to receive the signals transmitted from the at least three transmitters, to observe the Doppler shifts of the received signals, and for to obtain direction information of the respective at least three transmitters based on the Doppler shifts observed by the receiving unit and relative present positions of the station based on the direction information of the at least three transmitters.

**38.** The robot cleaner system according to claim 37, wherein the receiving unit comprises an antenna to receive the signals transmitted from the at least three transmitters.

**39.** The robot cleaner system according to claim 38, wherein the receiving unit further comprises a rotation body provided to rotate in the robot cleaner and in which the antenna is installed, and
rotation of the receiving unit is movement of the antenna of the receiving unit along a rotation track of the rotation body due to the rotation of the rotation body.

**40.** The robot cleaner system according to claim 38, wherein the receiving unit further comprises:

a frequency detector to detect the frequencies of the signals received by the receiving unit; and
a direction detector to detect directions in which the at least three transmitters are positioned by comparing the frequencies detected by the frequency detector and the frequencies of the signals transmitted from the station and to generate direction information.

**41.** The robot cleaner system according to claim 40, wherein the direction detector determines directions indicated by the antenna when the Doppler shifts are not observed from the frequencies detected by the frequency detector as the directions in which the at least three transmitters are positioned.

**42.** The robot cleaner system according to claim 38, wherein, when the Doppler shift is observed as the antenna moves along one of a rotation track of the robot cleaner and a rotation track of the rotation body, an angle $\theta_1$ between a forward direction of the robot cleaner and directions in which the at least three transmitters are positioned is expressed by the following formula,

$$\theta_1 = \sin^{-1}\left(\frac{\dot{x}_1}{r\dot{\theta}_1}\right)$$

where, r is a distance from one of rotation axes of the rotation body and the robot cleaner to the antenna, $\dot{\theta}_1$ is an angular velocity of $\theta_1$, and $\dot{x}_1$ is a linear velocity of the antenna in the direction parallel to the traveling directions of the signals when the antenna traveling along the rotation track is positioned in the forward direction of the robot cleaner.

43. The robot cleaner system according to claim 38, wherein the at least three transmitters comprise a first transmitter, a second transmitter, and a third transmitter, and
a present position of the robot cleaner is detected by estimating a first angle formed by the first transmitter, the robot cleaner, and the second transmitter, and a second angle formed by the second transmitter, the robot cleaner, and the third transmitter and taking the first angle and the second angle into consideration.

44. The robot cleaner system according to claim 38, wherein a plurality of antennas are installed at uniform intervals.

45. The robot cleaner system according to claim 37, wherein one of the at least three transmitters comprises a docking station to charge the robot cleaner and discharge foreign substances.

46. The robot cleaner system according to claim 37, wherein the at least three transmitters are installed at predetermined fixed positions.

47. A control method of a robot cleaner system comprising:

transmitting signals of predetermined natural frequencies from at least three transmitters;
receiving the signals transmitted from the at least three transmitters by a robot cleaner via a receiving unit;
determining whether a Doppler shift is observed by the receiving unit; and
detecting directions in which the at least three transmitters are positioned based on the observation of the Doppler shift.

48. The control method of a robot cleaner system according to claim 47, wherein the receiving unit comprises an antenna to receive the signals transmitted from the at least three transmitters.

49. The control method of a robot cleaner system according to claim 48, wherein the receiving unit further comprises a rotation body provided to rotate in the robot cleaner and in which the antenna is installed, and
rotation of the receiving unit is movement of the antenna of the receiving unit along a rotation track of the rotation body due to the rotation of the rotation body.

50. The control method of a robot cleaner system according to claim 48, wherein the direction detector determines directions indicated by the antenna when the Doppler shifts are not observed from the frequencies detected by the frequency detector as the directions in which the at least three transmitters are positioned.

51. The control method of a robot cleaner system according to claim 48, wherein, when the Doppler shift is observed as the antenna moves along one of a rotation track of the robot cleaner and a rotation track of the rotation body, an angle $\theta_1$ between a forward direction of the robot cleaner and directions in which the at least three transmitters are positioned is expressed by the following formula,

$$\theta_1 = \sin^{-1}\left(\frac{\dot{x}_1}{r\dot{\theta}_1}\right)$$

where, r is a distance from one of rotation axes of the rotation body and the robot cleaner to the antenna, $\dot{\theta}_1$ is an angular velocity of $\theta_1$, and $\dot{x}_1$ is a linear velocity of the antenna in the direction parallel to the traveling directions of the signals when the antenna traveling along the rotation track is positioned in the forward direction of the robot cleaner.

52. The control method of a robot cleaner system according to claim 48, wherein the at least three transmitters comprise a first transmitter, a second transmitter, and a third transmitter, and
a present position of the robot cleaner is detected by estimating a first angle formed by the first transmitter, the robot cleaner, and the second transmitter, and a second angle formed by the second transmitter, the robot cleaner, and the third transmitter and taking the first angle and the second angle into consideration.

Fig.1

# Fig.2

## Fig.3

Fig.4

Fig.5

Fig.6

# Fig.7

START

702 — PERFORMING AUTOMATIC CLEANING

704 — IS RETURNING MODE? — NO

YES

706 — IS STOPPED OR TRAVELING? — TRAVELING STATE

STOPPED STATE

708 — OBSERVING DOPPLER SHIFT BY ROTATING ANTENNA IN STOPPED STATE

714 — OBSERVING DOPPLER SHIFT DURING TRAVELING

710 — DETECTING DIRECTION OF DOCKING STATION (FORMULA 1)

716 — DETECTING DIRECTION OF DOCKING STATION (FORMULA 3)

712 — TRAVELING IN DETECTED DIRECTION OF DOCKING STATION

718 — TRAVELING IN DETECTED DIRECTION OF DOCKING STATION

720 — IS OBSTACLE IN TRAVELING PATH? — YES

NO

722 — OBSTACLE AVOIDING TRAVELING

724 — IS RETURNED? — NO

YES

END

# Fig.8

Fig.9

Fig.10

# Fig.11

START

1102 — ROBOT CLEANER TRANSMITS RADIO WAVE OF PREDETERMINED FREQUENCY

1104 — OBSERVING DOPPLER SHIFT BY ROTATING ANTENNA OF DOCKING STATION

1106 — DOCKING STATION DETECTS DIRECTIONS OF ROBOT CLEANER AND DISTANCES FROM ROBOT CLEANER (FORMULAS 1, 2, 3)

1108 — TRANSMITTING DETECTED DIRECTIONS OF ROBOT CLEANER AND DISTANCES TO ROBOT CLEANER

1110 — TRANSMITTING COORDINATE OF TARGET POSITION OF ROBOT CLEANER TO ROBOT CLEANER

1112 — ROBOT CLEANER TRAVELS BASED ON DIRECTIONS AND COORDINATE OF TARGET POSITION TRANSMITTED FROM DOCKING STATION

1114 — IS OBSTACLE IN TRAVELING PATH?
YES → OBSTACLE AVOIDING TRAVELING — 1116
NO ↓

1118 — IS ARRIVED AT TARGET POSITION?
NO →
YES ↓

END

EP 1 873 605 A1

Fig. 12

| | |
|---|---|
| 150a TRANSMITTER | |
| 150b TRANSMITTER | |
| 150c TRANSMITTER | |

FREQUENCY DETECTOR — 204

DIRECTION DETECTOR — 1206

TRAVELING DISTANCE DETECTOR — 208

RECHARGEABLE BATTERY — 210

REMAINING CAPACITY DETECTOR — 212

OBSTACLE DETECTOR — 106

FOREIGN SUBSTANCE AMOUNT DETECTOR — 216

CONTROLLER — 1214

1200

ROTATION BODY — 160e

WHEELS — 218

SUCTIONING UNIT — 220

Fig.13

# Fig.14

START

1402 — THREE TRANSMITTERS TRANSMIT RADIO WAVES OF PREDETERMINED FREQUENCIES

1404 — OBSERVING DOPPLER SHIFTS OF RESPECTIVE TRANSMITTERS BY ROTATING ANTENNA

1406 — DETECTING DIRECTIONS OF RESPECTIVE TRANSMITTERS (FORMULAS 1, 2, 3)

1408 — OBTAINING ANGLES $\theta 4$ AND $\theta 5$ BETWEEN ROBOT CLEANER AND THREE TRANSMITTERS

1410 — DETERMINING PRESENT POSITION OF ROBOT CLEANER USING ANGLES $\theta 4$ AND $\theta 5$

1412 — ROBOT CLEANER TRAVELS BASED ON PRESENT POSITION OF ROBOT CLEANER AND COORDINATE OF TARGET POSITION TO TARGET POSITION

1414 — IS OBSTACLE IN TRAVELING PATH?     YES

NO

OBSTACLE AVOIDING TRAVELING — 1416

1418 — IS ARRIVED AT TARGET POSITION?     NO

YES

END

**European Patent Office**

# EUROPEAN SEARCH REPORT

Application Number

EP 07 10 7487

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/156562 A1 (COHEN DAVID A [US] ET AL) 21 July 2005 (2005-07-21) | 1-36 | INV.<br>G05D1/02 |
| A | * paragraphs [0001], [0005], [0024], [0025] *<br>* claims 1,5 *<br>* figures 4a,4b,4c,5 * | 37-52 | |
| Y | WO 98/34125 A (NOKIA TELECOMMUNICATIONS OY [FI]; WECKSTROEM MIKKO TAPANI [GB]) 6 August 1998 (1998-08-06) | 1-36 | |
| A | Abstract<br>* page 1, lines 9,10,28-33 *<br>* page 3, lines 22-34 *<br>* page 7, lines 9-21 *<br>* page 7, lines 22-24 *<br>* claim 1 *<br>* claim 2 * | 37-52 | |
| A | US 2006/020369 A1 (TAYLOR CHARLES E [US] ET AL) 26 January 2006 (2006-01-26)<br>* paragraphs [0120] - [0122] *<br>* figure 1a * | 1-52 | TECHNICAL FIELDS SEARCHED (IPC)<br><br>G01S<br>A47L<br>G05D<br>H02J |
| A | US 5 572 427 A (LINK JOHN T [US] ET AL) 5 November 1996 (1996-11-05)<br>Abstract<br>* column 2, lines 27-41 *<br>* column 3, line 59 - column 4, line 7 *<br>* figure 6 * | 1-52 | |

The present search report has been drawn up for all claims

| Place of search | Date of completion of the search | Examiner |
|---|---|---|
| Munich | 21 August 2007 | Roberts, Neil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 07 10 7487

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2007

| Patent document cited in search report | | Publication date | Patent family member(s) | | Publication date |
|---|---|---|---|---|---|
| US 2005156562 | A1 | 21-07-2005 | US 2007114975 | A1 | 24-05-2007 |
| WO 9834125 | A | 06-08-1998 | AU 6211398 | A | 25-08-1998 |
| | | | CN 1246924 | A | 08-03-2000 |
| | | | EP 0956511 | A1 | 17-11-1999 |
| | | | JP 2001509892 | T | 24-07-2001 |
| | | | NO 993729 | A | 29-09-1999 |
| | | | US 6268829 | B1 | 31-07-2001 |
| US 2006020369 | A1 | 26-01-2006 | NONE | | |
| US 5572427 | A | 05-11-1996 | NONE | | |

EPO FORM P0459

For more details about this annex : see Official Journal of the European Patent Office, No. 12/82